# EUROPEAN PATENT APPLICATION

(11) **EP 4 582 611 A1**
(43) Date of publication of application: **09.07.2025**
(21) Application number: 23858522.8
(22) Date of filing: 17.01.2023
(51) Int. Cl.: D06F 25/00, D06F 58/20, D06F 58/24, D06F 58/26

(54) **CLOTHING TREATMENT EQUIPMENT**

(30) Priority: 31.08.2022 CN 202211057592; 31.08.2022 WO PCT/CN2022/116242
(71) Applicant: Nanjing Roborock Innovation Technology Co., Ltd., Nanjing, Jiangsu 210039 (CN)
(72) Inventor: WANG, Wei, Shenzhen, Guangdong 518000 (CN); ZHAO, Changjian, Shenzhen, Guangdong 518000 (CN); XU, Ming, Shenzhen, Guangdong 518000 (CN); QUAN, Gang, Shenzhen, Guangdong 518000 (CN)
(74) Representative: Cabinet Beau de Loménie
(86) International application number: PCT/CN2023/072662
(87) International publication number: WO 2024/045479

(57) **Abstract**

Clothing treatment equipment, comprising a drying device (2000) and a clothing accommodating device (1100). The drying device (2000) comprises a housing having an internal space at least divided into a moisture absorption space and a moisture discharge space, a moisture absorption and discharge rotating disc (2201), a moisture absorption and discharge rotating disc driving part (2300), a circulation blower (2100) operating at a first power, and a regenerative blower (2400) operating at a second power. The value of the area ratio of the projections of the moisture absorption space and the moisture discharge space in at least one plane perpendicular to a rotation axis and the value of the power ratio of the first power to the second power differ within a range of ±2. A first temperature measurement device for measuring the temperature of an airflow entering the clothing accommodating device and a second temperature measurement device for detecting the temperature of an airflow in the clothing accommodating device (1100) or the temperature of an airflow flowing out of the clothing accommodating device (1100) are also involved, and the difference value between temperatures measured by the two temperature measurement devices is 18-30°C. The clothing treatment equipment can maximize the moisture absorption efficiency and moisture discharge efficiency of the drying device (2000).

## Description

### CROSS-REFERENCE TO RELATED APPLICATIONS

This application claims priorities to Chinese Patent Application No. 202211057592.1 filed on August 31, 2022 and PCT International Patent Application No. PCT/CN2022/116242 filed on August 31, 2022, the disclosures of which are incorporated herein by reference.

### TECHNICAL FIELD

The present application relates to the technical field of electric household appliances, and in particular, to a laundry treating apparatus.

### BACKGROUND

In an existing laundry treating apparatus, a drying device generally heats moist air in a laundry accommodating device for moisture absorption by means of an evaporator or a heat pump to obtain high-temperature air, which reenters the laundry accommodating device for drying, such that moisture in the laundry can be evaporated away. There is a need to provide a drying device with both moisture absorbing and moisture-removing functions.

### SUMMARY

An object of the present application is to provide a laundry treating apparatus with a hygroscopic and dehumidifying rotary wheel, which can fully guarantee the moisture absorbing and moisture-removing capacities to improve the drying efficiency.

To achieve the above object, the present application provides a laundry treating apparatus. The laundry treating apparatus includes a drying device and a laundry accommodating device, where
the drying device includes:
a hygroscopic and dehumidifying rotary wheel,
a casing, accommodating the hygroscopic and dehumidifying rotary wheel, where an internal space of the casing is at least separated into a moisture absorbing space and a moisture removing space,
a circulating fan, operating at a first power to form a circulating airflow flowing through the laundry accommodating device and the moisture absorbing space, and
a regenerating fan, operating at a second power to form a regenerated airflow passing through the moisture removing space;
the laundry treating apparatus further includes a driving part for the hygroscopic and dehumidifying rotary wheel, where the driving part drives the hygroscopic and dehumidifying rotary wheel to rotate around a rotating shaft in the casing at a first rotational speed; and
a difference between a numerical value of an area ratio of projections, on at least one plane perpendicular to the rotating shaft, of the moisture absorbing space and the moisture removing space and a numerical value of a power ratio of the first power to the second power is within a range of ± 2.

Further, a ratio of a thickness of the hygroscopic and dehumidifying rotary wheel to a diameter of the hygroscopic and dehumidifying rotary wheel is 1:20 to 1:5, preferably, 1:15 to 1:10.

Further, the thickness of the hygroscopic and dehumidifying rotary wheel is 10 mm to 100 mm, and the diameter of the hygroscopic and dehumidifying rotary wheel is 40 mm to 500 mm.

Further, the laundry accommodating device is a drum, the drum includes an inner drum and an outer drum, and a ratio of the diameter of the hygroscopic and dehumidifying rotary wheel to a diameter of the inner drum is 1:2 to 3:4.

Further, the area ratio is 2:1 to 4:1, and the power ratio is 2:1 to 4:1.

Further, the first rotational speed is 2 rpm to 10 rpm, preferably, 4 rpm to 6 rpm.

Further, the drying device further includes a heating module and a condensing module; the heating module is adjacent to the moisture removing space; and the condensing module is arranged on a flow path of the regenerated airflow.

Further, the heating module operates between a first heating power and a second heating power, the first heating power is 400 W to 800W, and the second heating power is 1200 W to 1600 W.

Further, the heating module fluctuates, in a form of a square wave, between the first heating power and the second heating power.

Further, the condensing module is a water-cooled condenser, and a water flow rate of the condensing module is 0.2 L/min to 0.4 L/min, preferably 0.35 L/min.

The present application further provides a laundry treating apparatus. The laundry treating apparatus includes a drying device and a laundry accommodating device, where
the laundry accommodating device is provided with a first airflow inlet, and the first airflow inlet is communicated to the drying device through an air intake pipe;
the laundry accommodating device is provided with a first airflow outlet, and the first airflow outlet is communicated to the drying device through an air exhaust pipe;
the drying device includes:
   a hygroscopic and dehumidifying rotary wheel, and a driving part for the hygroscopic and dehumidifying rotary wheel, where the driving part drives the hygroscopic and dehumidifying rotary wheel to rotate;
   the laundry treating apparatus further includes:
      a first temperature detection device, arranged in a vicinity of the first airflow inlet and structured to detect a temperature of an airflow entering the laundry accommodating device, and
      a second temperature detection device, arranged in the laundry accommodating device or in a vicinity of the first airflow outlet, and configured to detect a temperature of an airflow in the laundry accommodating device or a temperature of an airflow flowing out of the laundry accommodating device; and
      at least in a stage of a working process of the laundry treating apparatus, a difference between a first detection temperature detected by the first temperature detection device and a second detection temperature detected by the second temperature detection device is 18°C to 30°C.

Further, the first detection temperature is 70°C to 85°C, preferably, 75 °C; and the second detection temperature is 50°C to 60°C, preferably, 53°C.

The present application further provides a laundry treating apparatus. The laundry treating apparatus includes a drying device and a laundry accommodating device, where
the drying device includes:
a hygroscopic and dehumidifying rotary wheel, and a driving part for the hygroscopic and dehumidifying rotary wheel, where the driving part drives the hygroscopic and dehumidifying rotary wheel to rotate;
a casing, accommodating the hygroscopic and dehumidifying rotary wheel, where an internal space of the casing is at least separated into a moisture absorbing space and a moisture removing space;
a ratio of a thickness of the hygroscopic and dehumidifying rotary wheel to a diameter of the hygroscopic and dehumidifying rotary wheel is 1:20 to 1:5, preferably, 1:15 to 1:10; and
a rotational speed of the hygroscopic and dehumidifying rotary wheel is 2 rpm to 10 rpm, preferably, 4 rpm to 6 rpm.

The present application further provides a laundry treating apparatus. The laundry treating apparatus includes a drying device and a laundry accommodating device;
the drying device includes:
a hygroscopic and dehumidifying rotary wheel;
a casing, accommodating the hygroscopic and dehumidifying rotary wheel, where an internal space of the casing is at least separated into a moisture absorbing space and a moisture removing space;
an area ratio of projections, on at least one plane perpendicular to the rotating shaft, of the moisture absorbing space and the moisture removing space is 2:1 to 4:1; and
the laundry treating apparatus further includes a driving part for the hygroscopic and dehumidifying rotary wheel, where the driving part drives the hygroscopic and dehumidifying rotary wheel to rotate at a first rotational speed, and the first rotational speed is 2 rpm to 10 rpm, preferably 4 rpm to 6 rpm.

The present application further provides a laundry treating apparatus. The laundry treating apparatus includes a drying device and a laundry accommodating device;
the drying device includes:
a hygroscopic and dehumidifying rotary wheel;
a driving part for the hygroscopic and dehumidifying rotary wheel, where the driving part drives the hygroscopic and dehumidifying rotary wheel to rotate at a first rotational speed, and the first rotational speed is 2 rpm to 10 rpm, preferably 4 rpm to 6 rpm, and
a heating module adjacent to at least part of the hygroscopic and dehumidifying rotary wheel; and
the heating module operates between a first heating power and a second heating power, the first heating power is 400 W to 800W, and the second heating power is 1200 W to 1600 W.

### BRIEF DESCRIPTION OF DRAWINGS

For clearer description of the specific embodiments of the present application or the technical solutions in the prior art, the following briefly introduces the accompanying drawings required to be used in the description of the specific embodiments or the prior art. Obviously, the accompanying drawings in the following description show some embodiments of the present application, and those of ordinary skill in the art can still derive other drawings from these accompanying drawings without creative efforts.
FIGs. 1 to 3 show perspective, rear and top views of a washer-dryer machine according to some embodiments of the present disclosure, respectively;
FIGs. 4 and 5 show top and perspective views of a drying module in FIG. 2 and FIG. 3, respectively;
FIG. 6 shows a structural diagram of a lower casing of the drying module;
FIGs. 7 to 9 show top, bottom and exploded views of a circulating fan, respectively;
FIG. 10 shows a schematic diagram of a matching mode between the lower casing of the circulating fan and the drying module;
FIG. 11 shows a schematic diagram of a connection mode between a flexible pipe and the lower casing;
FIG. 12 shows a schematic diagram of a flow direction of a circulating airflow;
FIGs. 13 and 14 show an exploded view and a post-assembling perspective view of a hygroscopic and dehumidifying assembly, respectively;
FIG. 15 shows a top view of the lower casing;
FIGs. 16 and 17 show exploded views of a first mounting portion of the lower casing and an upper casing for mounting the hygroscopic and dehumidifying assembly, respectively;
FIG. 18 shows an exploded mounting view of the first mounting portion, the upper casing, and the hygroscopic and dehumidifying assembly;
FIG. 19 shows a schematic diagram of a fixing mode between an integrated lower casing and the upper casing of the hygroscopic and dehumidifying assembly;
FIG. 20 shows a schematic diagram of a flow direction of a moisture removing airflow;
FIGs. 21 and 22 show exploded and perspective views of structures related to a heating module and a regenerating fan, respectively;
FIGs. 23 and 24 show perspective and exploded views of a first connector, respectively;
FIGs. 25 and 26 show perspective and exploded views of a second connector, respectively;
FIG. 27 shows a schematic diagram of the mounting position of the heating module on the upper casing;
FIGs. 28 to 30 show a perspective view of the heating module, a schematic diagram of a mesh plate and a bottom view of the heating module, respectively;
FIG. 31 shows a schematic diagram of a fixing mode between a condensing module and the lower casing; and
FIG. 32 shows a sectional view of an outer casing of the condensing module.

### DETAILED DESCRIPTION

The technical solutions in the embodiments of the present application will be clearly and completely described below in conjunction with the accompanying drawings in the embodiments of the present application. Obviously, the described embodiments are merely some rather than all of the embodiments of the present application. The components in the embodiments of the present application as generally described and shown in the accompanying drawings herein can be arranged and designed in a variety of different configurations. Therefore, the detailed description of the embodiments of the present application as provided below in conjunction with the accompanying drawings are not intended to limit the scope claimed by the present application, but merely for the purpose of indicating the selected embodiments of the present application. The features included in different embodiments can be combined with each other. Based on the embodiments of the present application, all other embodiments (including new embodiments derived by combining the features included in different embodiments with each other) obtained by those skilled in the art without paying creative efforts shall fall within the protection scope of the present application.

It should be noted that similar numerals and letters refer to similar items in the accompanying drawings below. Therefore, once an item is defined in a drawing, it is unnecessary to further define and explain this item in subsequent drawings. Meanwhile, in the description of the present application, the terms such as "first" and "second" are merely for the purpose of distinguishing description, and shall not be understood as indicating or implying relative importance.

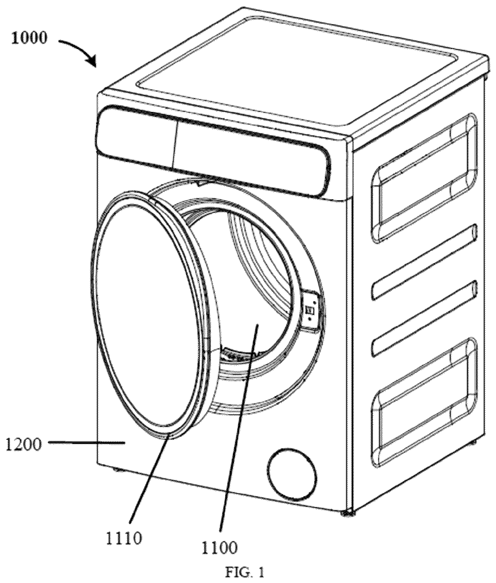

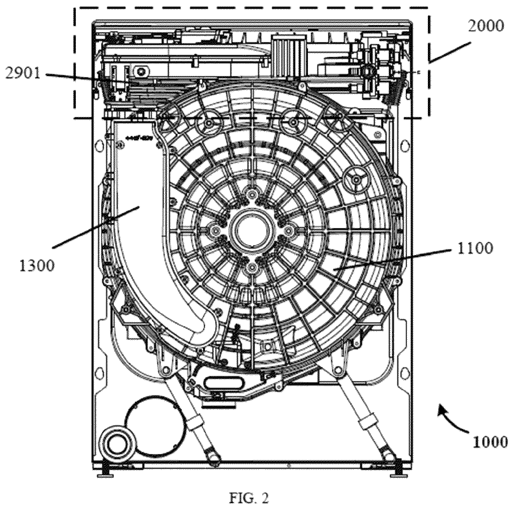

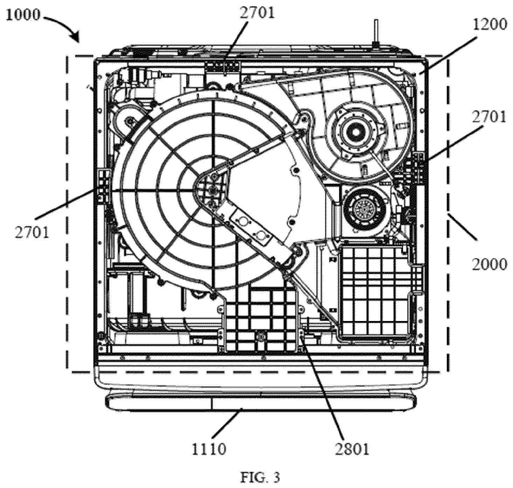

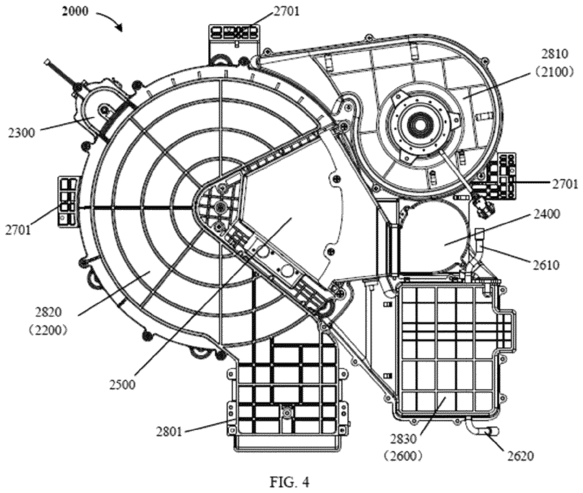

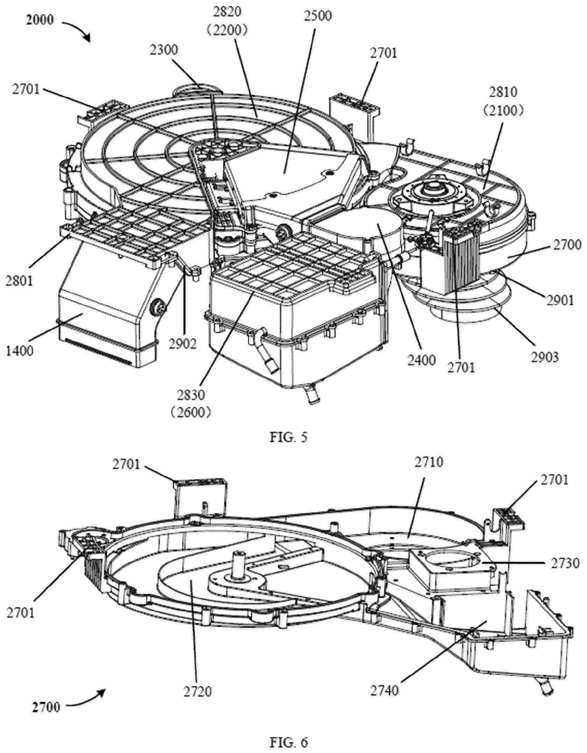

The present application provides a laundry treating apparatus. The laundry treating apparatus is intended to carry out washing, rinsing, ironing, drying and other treatment on laundry. The laundry treating apparatus includes, but is not limited to, a washer, a dryer, a washer-dryer machine or other laundry treating apparatuss. FIGs. 1 to 3 show perspective, rear and top views of a washer-dryer machine 1000 according to some embodiments of the present disclosure, respectively. FIG. 4 and FIG. 5 show top and perspective views of a drying device 2000 in FIG. 2 and 3, respectively.

It should be noted that the laundry treating apparatus according to the embodiments of the present disclosure is illustrated by taking a front-load washer-dryer machine 1000 shown in FIGs. 1 to 3 as an example. It should be understood, however, that the laundry treating apparatus according to the embodiments of the present disclosure can be adapted to any type of laundry treating apparatus, including but not limited to front-load drum washing machines, top-load drum washing machines, pulsator washing machines, agitator washing machines, mini washing machines, and the like.

As shown in FIGs. 1 to 3, the washer-dryer machine 1000 includes a laundry accommodating device 1100 for accommodating a laundry to be treated (where "to be treated" may refer to "to be washed or dried" here). The laundry accommodating device 1100 may be an accommodating drum, an accommodating basket or other devices capable of accommodating laundry. For instance, the laundry accommodating device 1100 may be provided as a drum. The drum may include an inner drum and an outer drum, the inner drum is structured to hold the laundry to be treated and rotates under the action of a driving mechanism, and the outer drum is fixed by suspension relative to the body of the washer-dryer machine. The inner drum has water-permeable air vents. The outer drum is impermeable to water and air, and is provided with a first air outlet. The diameter of the inner drum is smaller than that of the outer drum. An outer casing 1200 of the washer-dryer machine 1000 is provided with a door body 1110 at a position corresponding to the laundry accommodating device 1100. The door body 1110 is pivotally connected to the outer casing 1200. The opening and closing of the door body 1110 may be controlled manually by a user or by an electronic controller.

As shown in FIG. 1 to FIG. 3, the washer-dryer machine 1000 includes a drying device 2000 for drying the laundry in the laundry accommodating device 1100. The drying device 2000 is located above the laundry accommodating device 1100. The laundry accommodating device 1100 and the drying device 2000 are not fixed in relative position, and may be arranged vertically or horizontally relative to each other. For instance, the drying device 2000 is arranged above the laundry accommodating device 1100 (FIG. 2), or the drying device 2000 is arranged behind the laundry accommodating device 1100, or the drying device 2000 is arranged below the laundry accommodating device 1100, or the drying device 2000 is arranged beside the laundry accommodating device 1100 (not shown).

As shown in FIGs. 4 and 5, in an embodiment of the present disclosure, the drying device 2000 includes a moisture absorbing passage, a regenerating passage, a circulating fan 2100, a hygroscopic and dehumidifying assembly 2200, a driving part 2300 for a hygroscopic and dehumidifying rotary wheel, and a regenerating fan 2400.

As shown in FIG. 2, a first air inlet 2901 of the moisture absorbing passage is communicated to an air exhaust pipe 1300 of the laundry accommodating device 1100. A first air outlet 2902 of the moisture absorbing passage is communicated to an air intake pipe of the laundry accommodating device 1100. For example, as shown in FIG. 5, the first air outlet 2902 is communicated to the air intake pipe (not shown in FIG. 5) of the laundry accommodating device 1100 through a connector 1400. The circulating fan 2100 is located in the moisture absorbing passage, and is structured to form a circulating airflow in the laundry accommodating device 1100 and the moisture absorbing passage. The regenerating fan 2400 is located in the regenerating passage, and is structured to form a regenerating/moisture-removing airflow in the regenerating passage.

Still referring to FIGs. 2 and 5, the laundry accommodating device 1100 has a first airflow inlet and a first airflow outlet. The first airflow inlet is the connection between the air intake pipe and the laundry accommodating device 1100. Alternatively, the first airflow inlet in the laundry accommodating device 1100 is communicated to the drying device 2000 through an air intake pipe. The first airflow inlet is a connection between the air exhaust pipe 1300 and the laundry accommodating device 1100. Or, the first airflow outlet in the laundry accommodating device 1100 is communicated to the drying device 2000 through an air exhaust pipe 1300.

One part of the hygroscopic and dehumidifying assembly 2200 is located on the moisture absorbing passage, and the other part of thereof is located on the regenerating passage, such that both the circulating airflow in the moisture absorbing passage and the moisture removing airflow in the regenerating passage flow through the hygroscopic and dehumidifying assembly 2200. The driving part for the hygroscopic and dehumidifying rotary wheel 2300 may be, for example, a driving motor, which is structured to enable the hygroscopic and dehumidifying assembly 2200 to move (e.g., rotate) relative to the moisture absorbing passage and the regenerating passage. During the rotating of the hygroscopic and dehumidifying assembly 2200, moisture in the circulating airflow is absorbed, and exhausted through the moisture removing airflow.

According to some embodiments, the hygroscopic and dehumidifying assembly 2200 may include a hygroscopic and dehumidifying rotary wheel 2201. The hygroscopic and dehumidifying rotary wheel 2201 is provided with a moisture absorbent for absorbing the moisture. For example, the moisture absorbent may be zeolite (a molecular sieve), alkali metal aluminosilicate (13X molecular sieve), lithium chloride, silica gel, modified silica gel, activated alumina, and the like.

The driving part 2300 for the hygroscopic and dehumidifying rotary wheel is structured to drive the hygroscopic and dehumidifying rotary wheel 2201 to rotate relative to the moisture absorbing passage and the regenerating passage. Both the circulating airflow and the moisture removing airflow flow through the hygroscopic and dehumidifying rotary wheel 2201. A region through which the circulating airflow flows on the hygroscopic and dehumidifying rotary wheel 2201 is a moisture absorbing region, and a region through which the moisture removing airflow flows is a regenerating region.

According to some embodiments, as shown in FIGs. 4 and 5, the drying device 2000 may further include a heating module 2500 and a condensing module 2600 which are arranged on the regenerating passage. The heating module 2500 covers the regenerating region of the hygroscopic and dehumidifying assembly 2200 (the hygroscopic and dehumidifying rotary wheel 2201), and is structured to heat the regenerating region of the hygroscopic and dehumidifying assembly 2200 (the hygroscopic and dehumidifying rotary wheel 2201) to desorb the moisture absorbed by the hygroscopic and dehumidifying assembly 2200 (the hygroscopic and dehumidifying rotary wheel 2201). The condensing module 2600 is structured to condense the moisture removing airflow flowing out of the regenerating region of the hygroscopic and dehumidifying assembly 2200 to dry the moisture removing airflow.

According to some embodiments, a rotary wheel detection device is arranged at the position of the hygroscopic and dehumidifying rotary wheel 2201, and is structured to monitor the rotational speed of the hygroscopic and dehumidifying rotary wheel 2201 and send the rotational speed to a control device of the laundry treating apparatus, so as to ensure that the hygroscopic and dehumidifying rotary wheel 2201 is kept rotating continuously during a drying operation, and to prevent the heating module 2500 from continuously heating a region and burning down the hygroscopic and dehumidifying rotary wheel 2201. The control device of the laundry treating apparatus adjusts the heating power of the heating module 2500, the circulating power of the circulating fan 2100, the regenerating power of the regenerating fan 2400 and the like accordingly by means of the feedback of the rotational speed of the hygroscopic and dehumidifying rotary wheel 2201.

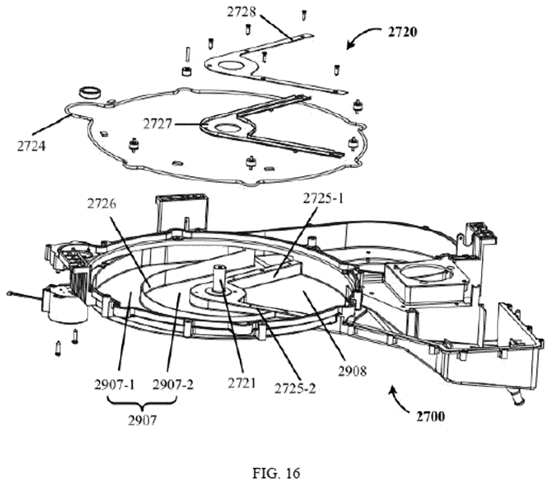

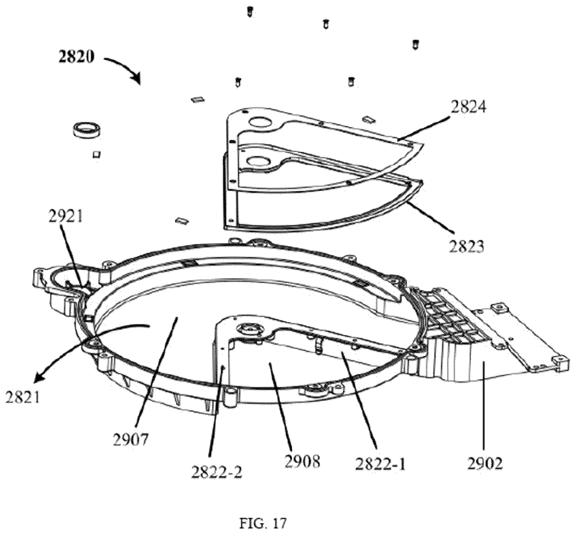

According to some embodiments, the drying device 2000 further includes an upper casing and a lower casing. The upper casing and the lower casing wrap and fix the individual components of the drying device 2000 to allow the drying device 2000 to form an integral module. According to some embodiments, the drying device 2000 further includes a casing. The casing includes a first casing (a lower casing 2700) and a second casing (an upper casing 2820) for accommodating the hygroscopic and dehumidifying rotary wheel 2201, two separating ribs (first separators 2725-1 and 2725-2 as shown in FIG. 16) are arranged on the first casing, and two separating ribs (second separators 2822-1 and 2822-2 as shown in FIG. 17) are arranged on the second casing. The first casing (the lower casing 2700) is provided, at a central position, with a short shaft 2721 and an accommodating portion on which the short shaft 2721 is mounted, and one separating rib 2725-1 of the first casing may be arranged to extend from the inner periphery wall of the first casing to the accommodating portion of the first casing. The other separating rib 2725-2 of the first casing (the lower casing 2700) may be arranged to extend from another position of the inner periphery wall of the first casing to the accommodating portion of the first casing. At least two separating ribs do not intersect with the short shaft 2721, such that an internal space formed by docking the first and second casings may be separated into two spaces, namely, a first space and a second space, or the moisture absorbing space and the regenerating space, or the moisture absorbing region and the regenerating region. According to some examples, the accommodating portion is in a shape of a circular ring, and the at least two separating ribs are arranged tangential to the outer periphery of the circular ring accommodating portion.

According to some embodiments, the upper and lower casings of the drying device 2000 may be discrete casings corresponding to individual components of the drying device 2000, respectively, or may be an integrated casing corresponding to a plurality of components of the drying device 2000. For example, in the embodiments shown in FIGs. 4 and 5, the lower casing 2700 of the drying device 2000 is an integrated casing. FIG. 6 further shows the structural diagram of the integrated lower casing 2700. As shown in FIG. 6, the lower casing 2700 is provided with a mounting portion 2710 for mounting the circulating fan 2100, a mounting portion 2720 (i.e., a first mounting portion) for mounting the hygroscopic and dehumidifying assembly 2200, a mounting portion 2730 for mounting the regenerating fan 2400, and a mounting portion 2740 for mounting the condensing module 2600. The upper casing of the drying device 2000 is a discrete casing, including an upper casing 2810 for mounting of the circulating fan 2100, an upper casing 2820 for mounting of the hygroscopic and dehumidifying assembly 2200, and an upper casing 2830 for mounting the condensing module 2600.

According to some embodiments, as shown in FIGs. 3 to 5, a plurality of fourth mounting portions 2701 is arranged on the lower casing 2700 of the drying device 2000, and a fifth mounting portion 2801 is arranged on the upper casing 2820. The fourth mounting portion 2701 and the fifth mounting portion 2801 are fixed on the outer casing 1200 of the washer-dryer machine 1000 in a lap joint way, such that the mounting and fixation of the whole drying device 2000 are achieved. In this embodiment, there is no direct rigid connection between the drying device 2000 and the laundry accommodating device 1100, such that the vibration of the laundry accommodating device 1100 in a working process can be prevented from being transmitted to the drying device 2000 (in particular the hygroscopic and dehumidifying assembly 2200), and the stability and reliability of the drying device 2000 are improved.

According to some embodiments, as shown in FIGs. 2 and 5, the first air inlet 2901 of the moisture absorbing passage of the drying device 2000 may be communicated with the air exhaust pipe 1300 of the laundry accommodating device 1100 through a flexible pipe (e.g., a corrugated hose) 2903. According to some embodiments, the air exhaust pipe 1300 may be provided with a filter (e.g., a filter screen) for filtering debris and lint. In addition, the connector 1400 may also be communicated with the air intake pipe of the laundry accommodating device 1100 through a flexible pipe (not shown in FIG. 2 and FIG. 5). Hence, the vibration of the laundry accommodating device 1100 can be prevented from being transmitted to the drying device 2000 (in particular the hygroscopic and dehumidifying assembly 2200), such that the stability and reliability of the drying device 2000 are improved.

According to some embodiments, as shown in FIGs. 4 and 5, the individual components (including the circulating fan 2100, the hygroscopic and dehumidifying assembly 2200, the driving part 2300 for the hygroscopic and dehumidifying rotary wheel, the regenerating fan 2400, the heating module 2500, the condensing module 2600 or the like) of the drying device 2000 are horizontally arranged, and the rotating shafts of rotating components thereamong (including the circulating fan 2100, the hygroscopic and dehumidifying assembly 2200, the driving part 2300 for the hygroscopic and dehumidifying rotary wheel, and the regenerating fan 2400) are approximately parallel, and approximately perpendicular to the upper casing of the washer-dryer machine 1000 and the rotating shaft of the laundry accommodating device 1100. According to this embodiment, the height of the washer-dryer machine 1000 can be minimized to save the space.

It should be understood that the laundry accommodating device 1100 is generally a cylindrical structure with a rotating shaft parallel to the ground, such that more space is available above the side direction (compared to right above) the laundry accommodating device 1100. According to some embodiments, some components of the drying device 2000 may be arranged in the space between the side top of the laundry accommodating device 1100 and the outer casing 1200, such that the internal space of the washer-dryer machine 1000 can be fully utilized, enabling the washer-dryer machine 1000 to be more compact in structure and smaller in volume. For example, in the embodiments shown in FIGs. 3 to 5, components such as the circulating fan 2100, the driving part 2300 for the hygroscopic and dehumidifying rotary wheel, the regenerating fan 2400 and the condensing module 2600 are all arranged above the side of the laundry accommodating device 1100. In this embodiment, the overall height of the washer-dryer machine 1000 depends on the diameter of the laundry accommodating device 1100 and the thickness of the component (i.e., the hygroscopic and dehumidifying assembly 2200) located right above the laundry accommodating device 1100.

According to some embodiments, the rotating shafts of two rotating components of the drying device 2000 with the largest diameters may be arranged on both sides of the rotating shaft of the laundry accommodating device 1100, respectively, and both the rotating shafts are noncoplanar with and perpendicular to the rotating shaft of the laundry accommodating device 1100. Hence, the internal space of the washer-dryer machine 1000 can be further fully utilized, enabling the washer-dryer machine more compact in structure and smaller in volume. For example, in the embodiments shown in FIGs. 3 to 5, the two rotating components with the largest diameters include the hygroscopic and dehumidifying assembly 2200 and the circulating fan 2100, and the rotating shafts of the hygroscopic and dehumidifying assembly 2200 and the circulating fan 2100 are located on the left and right sides of the laundry accommodating device 1100 (from the front-view direction of the washer-drying machine 1000), respectively, and are noncoplanar with and perpendicular to the rotating shaft of the laundry accommodating device 1100.

In the current related technologies, there is no consideration given to the cooperation between two parameters, namely, the area ratio of the moisture absorbing space to the moisture removing space of the hygroscopic and dehumidifying rotary wheel 2201 and the power ratio of the circulating fan 2100 to the regenerating fan 2400. However, the cooperation of these two parameters can significantly improve the drying efficiency. Under the premise that the hygroscopic and dehumidifying rotary wheel 2201 has a reasonable volume, both the moisture absorbing capacity and the moisture removing capacity can be effectively improved when the area ratio of the moisture absorbing space to the moisture removing space is in an optimal range.

According to some embodiments, the circulating fan 2100 operates at a first power to form a circulating airflow that flows through the laundry accommodating device 1100 and the moisture absorbing space of the drying device 2000. The regenerating fan 2400 operates at a second power to form a regenerated airflow flowing through the moisture removing space. In an embodiment, the power ratio of the first power to the second power is 2:1 to 4:1. For instance, the power ratio of the first power to the second power is 2:1, 2.4:1, 2.8:1, 3:1, 3.2:3.2:1, 3.5:1, 3.8:1, 4:1 or the like. More specifically, the first power of the circulating fan 2100 may be set within the range of 30 W to 90 W. The second power of the regenerating fan 2400 may be set within the range of 10W to 30 W.

It should be clarified that the area of the projection of the moisture absorbing space on at least one plane perpendicular to the rotating shaft can be understood as the effective moisture absorbing area that is defined when the hygroscopic and dehumidifying rotary wheel 2201 rotates to the moisture absorbing region. The area of the projection of the moisture removing space on at least one plane perpendicular to the rotating shaft can be understood as the effective moisture-removing area that is defined when the hygroscopic and dehumidifying rotary wheel 2201 rotates to the regenerating region. The area ratio of the projections, on at least one plane perpendicular to the rotating shaft, of the moisture absorbing space and the moisture removing space is in a range of 2:1 to 4:1, for instance, 2:1, 2.4:1, 2.8:1, 3:1, 3.2:1, 3.6:1 or 4:1.

The difference between the numerical value of the area ratio of the projections, on at least one plane perpendicular to the rotating shaft, of the moisture absorbing space and the moisture removing space and the numerical value of the power ratio of the first power to the second power is within a range of ± 2. Alternatively, the difference between the area ratio of the moisture absorbing space to the moisture removing space and the power ratio of the first power to the second power is in a very small range. That is, the area ratio is numerically equivalent to the power ratio. For instance, when the area ratio of the projections, on at least one plane perpendicular to the rotating shaft, of the moisture absorbing space and the moisture removing space is 2:1 and the power ratio of the first power to the second power is 3:1, the difference between the numerical value of the area ratio and the numerical value of the power ratio is -1. For instance, when the area ratio of the projections, on at least one plane perpendicular to the rotating shaft, of the moisture absorbing space and the moisture removing space is 3:1 and the power ratio of the first power to the second power is 2:1, the difference between the numerical value of the area ratio and the numerical value of the power ratio is 1. For another instance, when the area ratio of the projection, on at least one plane perpendicular to the rotating shaft, of the moisture absorbing space and the moisture removing space is 3:1 and the power ratio of the first power to the second power is 3:1, the difference between the numerical value of the area ratio and the numerical value of the power ratio is 0. When the area ratio of the projections, on at least one plane perpendicular to the rotating shaft, of the moisture absorbing space and the moisture removing space is 3:1, the area of the moisture absorbing space accounts for about 75% of the area of the whole hygroscopic and dehumidifying rotary wheel 2201, and the area of the moisture removing space accounts for about 25% of the area of the whole hygroscopic and dehumidifying rotary wheel 2201. When the power ratio of the first power to the second power is 3:1, the power of the circulating fan 2100 may be set to be about 60 W, and the power of the regenerating fan 2400 is about 20 W.

In this embodiment, the difference between the numerical value of the area ratio and the numerical value of the power ratio does not exceed ± 2, such that the airflow entering the moisture absorbing space and the moisture removing space can be effectively controlled, which in turn effectively improves the moisture absorbing and moisture-removing efficiency. The circulating fan 2100 and the regenerating fan 2400 operate at an appropriate power ratio, such that a circulating airflow and a regenerated airflow can be provided in an appropriate amount to complete moisture absorption and moisture removal. With the reasonable design cooperation between the structure of the hygroscopic and dehumidifying rotary wheel 2201, the power of the circulating fan 2100 and the power of the regenerating fan 2400, the moisture absorption efficiency and moisture removal efficiency of the drying device 2000 can be maximized.

In an embodiment, the driving part 2300 for the hygroscopic and dehumidifying rotary wheel drives the hygroscopic and dehumidifying rotary wheel 2201 at a first rotational speed. Specifically, the first rotational speed may be 2 rpm to 10 rpm. Specifically, the first rotational speed may be set to 2 rpm, 3 rpm, 4 rpm, 5 rpm, 6 rpm, 7 rpm, 7.5 rpm, 9 rpm, 10 rpm or the like.

In this embodiment, when the area ratio in the hygroscopic and dehumidifying rotary wheel 2201 and the power ratio of the two fans are each within an appropriate range, the driving part 2300 for the hygroscopic and dehumidifying rotary wheel drives the hygroscopic and dehumidifying rotary wheel 2201 to rotate at the first rotational speed, such that the moisture absorbing effect of the moisture absorbing space and the moisture-removing effect of the moisture removing space can be fully exerted to improve the drying efficiency. Specifically, it can be understood that the circulating fan 2100 operates at the first power to transport a circulating airflow in the laundry accommodating device 1100 to the moisture absorbing space through the air exhaust pipe 1300. The hygroscopic and dehumidifying rotary wheel 2201 that rotates to the moisture absorbing space at the first rotational speed absorbs moisture in the circulating airflow during rotation. In the thickness direction of the hygroscopic and dehumidifying rotary wheel 2201, the circulating airflow passes through the hygroscopic and dehumidifying rotary wheel 2201 from one side of to the other side of the hygroscopic and dehumidifying rotary wheel 2201, so as to achieve the purpose of absorbing the moisture in the circulating airflow. The regenerating fan 2400 that operates at the second power transports the regenerating/moisture-removing airflow to the regenerating region. When the hygroscopic and dehumidifying rotary wheel 2201 that rotates to the moisture removing space at the first rotational speed encounters the regenerating/moisture-removing airflow, the moisture in the hygroscopic and dehumidifying rotary wheel 2201 is removed, such that the hygroscopic and dehumidifying rotary wheel 2201 rotating out of the moisture removing space regains the moisture absorbing capacity. When the hygroscopic and dehumidifying rotary wheel 2201 in the moisture removing space encounters the regenerating/moisture-removing airflow, the regenerating/moisture-removing airflow also passes through the hygroscopic and dehumidifying rotary wheel 2201 from one side to the other side of the hygroscopic and dehumidifying rotary wheel 2201 in the thickness direction of the hygroscopic and dehumidifying rotary wheel 2201, so as to achieve the purpose of removing the moisture from the hygroscopic and dehumidifying rotary wheel 2201. Therefore, the area ratio in the hygroscopic and dehumidifying rotary wheel 2201, the power ratio of the two fans and the first rotational speed of the hygroscopic and dehumidifying rotary wheel 2201 as discussed above can coordinate with each other to give full play to the moisture absorbing effect of the hygroscopic and dehumidifying rotary wheel 2201 in the moisture absorbing space and the moisture removing effect of the hygroscopic and dehumidifying rotary wheel 2201 in the moisture removing space, thereby improving the drying efficiency of the drying device 2000.

In an embodiment, the heating module 2100 operates between the first heating power and the second heating power. The heating module 2100 may operate between the first heating power and the second heating power in the form of a sine wave, a square wave, a sawtooth wave or the like. The heating module 2100 may also operate between the first heating power and the second heating power in other irregular forms. The specific operation mode of the heating module 2100 may be adjusted according to the actual situation. For instance, in different heating stages of the drying process, different operation modes may be adopted..

The first heating power may be set to 400 W to 800 W, and the second heating power may be set to 1200 W to 1600 W. In an embodiment, the first heating power is 400 W and the second heating power is 1600 W. In an embodiment, the first heating power is 550 W, and the second heating power is 1450 W. In an embodiment, the heating power of the heating module 2100 may fluctuate between 600 W and 1400 W in the form of a square wave. In another embodiment, the heating module 2100 may operate following an operational cycle T below: for instance, operating for 3/4T at the second heating power of 1300 W, then for 1/4T at the first heating power of 550 W, and afterwards for the operational cycle T in cycle until drying is completed. In another embodiment, the heating module may operate alternately in cycle following an operational cycle T1 and an operational cycle T2: for instance, operating for 1/2T1 at the second heating power of 1400 W, and then for 1/2T1 at the first heating power of 600 W; afterwards, operating for 1/2T2 at the second heating power of 1250 W, and then for 1/2T2 at the first heating power of 750 W; and so on alternately in cycle according to the operational cycle T1 and the operational cycle T2, until the drying is completed.

In this embodiment, the heating module 2100 operates following an appropriate heating rule, such that the uneven heating of the hygroscopic and dehumidifying rotary wheel 2201 can be avoided, the heating or drying time can be shortened, and the moisture absorbing effect of the moisture absorbing space and the moisture-removing effect of the moisture removing space can be improved, thereby improving the drying efficiency.

In an embodiment, the condensing module 2600 may be arranged at the rear end/downstream of the moisture removing space and communicated with a regenerated airflow outlet of the regenerating fan 2400, and the condensing module 2600 is structured to condense a high-temperature and high-moisture regenerated airflow output by the regenerated airflow outlet to form a low-temperature dry airflow. The condensing module 2600 is a water-cooled condenser, which condenses, by water cooling, the air exhausted from the moisture removing space. The flow rate of the water flow is 0.2 L/min to 0.4 L/min. In an embodiment, the flow rate of the water flow is 0.35 L/min.

In this embodiment, a condensation treatment method of the condensing module 2600 is provided. With the condensation treatment method, the air exhausted from the moisture removing space can be condensed, such that part of the water vapor is condensed into liquid water and then discharged. In this way, the moisture content in the airflow is reduced, and the moisture removing efficiency of the drying device 2000 can be improved.

The driving part 2300 for the hygroscopic and dehumidifying rotary wheel drives the hygroscopic and dehumidifying rotary wheel 2201 to rotate. When the hygroscopic and dehumidifying rotary wheel 2201 rotates to the moisture absorbing region, the airflow is subjected to moisture absorption, after which the hygroscopic and dehumidifying rotary wheel 2201 continues to rotate to the regenerating region. The hygroscopic and dehumidifying rotary wheel 2201 is subjected to moisture removal at the regenerating region. After the moisture removal, the hygroscopic and dehumidifying rotary wheel 2201 restores the moisture absorbing function, and continues to rotate to the moisture absorbing region for moisture absorption, and so on in cycle. Therefore, different settings of the thickness and diameter of the hygroscopic and dehumidifying rotary wheel 2201 affect the hygroscopic and dehumidifying effects on the airflow. In addition, the rotational speed of the hygroscopic and dehumidifying rotary wheel 2201 also affects the hygroscopic and dehumidifying effect on the airflow.

In a group of embodiments, the ratio of the thickness to the diameter of the hygroscopic and dehumidifying rotary wheel 2201 is 1:20 to 1:5. The rotational speed of the hygroscopic and dehumidifying rotary wheel 2201 is 2 rpm to 10 rpm. In other different embodiments, the ratio of the thickness to the diameter of the hygroscopic and dehumidifying rotary wheel 2201 may be set to 1:15, 1:13, 1:12, 1:10 or other numerical values. In other different embodiments, the first rotational speed may be set to 3 rpm, 4 rpm, 5 rpm, 6 rpm, 7 rpm, 8 rpm, 9 rpm, 10 rpm, or other non-integers (e.g., 3.5 rpm, 4.5 rpm, 5.5 rpm, 6.5 rpm or the like).

In an embodiment, the hygroscopic and dehumidifying rotary wheel 2201 may be cylindrical. The thickness of the hygroscopic and dehumidifying rotary wheel 2201 may be set to 10 mm to 100 mm. The diameter of the hygroscopic and dehumidifying rotary wheel 2201 may be set to 40 mm to 500 mm. For instance, in an embodiment, the thickness of the hygroscopic and dehumidifying rotary wheel 2201 may set to 25mm, and the diameter thereof may be set to 320 mm. In an embodiment, the thickness of the hygroscopic and dehumidifying rotary wheel 2201 may be set to 30 mm, the diameter thereof may be set to 200 mm. In another embodiment, the thickness of the hygroscopic and dehumidifying rotary wheel 2201 may be set to 35 mm, the diameter of thereof may be set to 300 mm. In a further another embodiment, the thickness of the hygroscopic and dehumidifying rotary wheel 2201 may be set to 40mm, the diameter of thereof may be set to 350 mm.

In an embodiment, when the thickness of the hygroscopic and dehumidifying rotary wheel 2201 is set to 35 mm, the diameter thereof may be set to 175 mm to 750 mm. In an embodiment, when the thickness of the hygroscopic and dehumidifying rotary wheel 2201 is set to 42 mm, the diameter thereof may be set to 210 mm to 840 mm. In an embodiment, when the thickness of the hygroscopic and dehumidifying rotary wheel 2201 is set to 25 mm, the diameter thereof may be set to 125 mm to 500 mm. The setting of the thickness and diameter of the hygroscopic and dehumidifying rotary wheel 2201 may also be a different combination.

In this embodiment, an appropriate ratio of thickness to diameter and an appropriate rotational speed are set for the hygroscopic and dehumidifying rotary wheel 2201, such that the structure and motion state of the hygroscopic and dehumidifying rotary wheel 2201 are defined, and a better drying effect can be achieved.

In an embodiment, the ratio of thickness to diameter of the hygroscopic and dehumidifying rotary wheel 2201 is set to 1:15 to 1:10, the rotational speed of the hygroscopic and dehumidifying rotary wheel 2201 is 4 rpm to 6 rpm, and further, the area ratio of the moisture absorbing space to the moisture removing space is 2:1 to 4:1. For instance, the area ratio of the moisture absorbing space to the moisture removing space is 2:1, 5:2, 7:2, or 4:1. Three parameter values, namely, the ratio of the thickness to the diameter of the hygroscopic and dehumidifying rotary wheel 2201, the rotational speed and the area ratio of the moisture absorbing space to the moisture removing space, can be combined to further improve the drying efficiency.

In an embodiment, the ratio of the diameter of the hygroscopic and dehumidifying rotary wheel 2201 to the diameter of the inner drum is 1:2 to 3:4. In other embodiments, the ratio of the diameter of the hygroscopic and dehumidifying rotary wheel 2201 to the diameter of the inner drum may also be set to 2:4, 2.2:4, 2.5:4, 2.6:4, 2.8:4, or 3:4. The range of the diameter of the hygroscopic and dehumidifying rotary wheel 2201 may be set to 40 mm to 500 mm. The diameter of the inner drum may be set in the range of 400 mm to 800 mm, which may be specifically adjusted depending on the laundry volume/loaded washing weight. For instance, the diameter of the hygroscopic and dehumidifying rotary wheel is 300 mm, and the diameter of the inner drum is 480 mm. For instance, the diameter of the hygroscopic and dehumidifying rotary wheel is 320 mm, and the diameter of the inner drum is 580 mm. For another instance, the diameter of the hygroscopic and dehumidifying rotary wheel is 350 mm, and the diameter of the inner drum is 470 mm. The diameter of the hygroscopic and dehumidifying rotary wheel is 320 mm, and the diameter of the inner drum is 580 mm.

In this embodiment, in one aspect, the overall structure of the laundry treating apparatus needs to be limited to an appropriate volume, and the diameter of the hygroscopic and dehumidifying rotary wheel 2201 needs to be smaller than the diameter of the inner drum since in addition to the hygroscopic and dehumidifying rotary wheel 2201, it is required to arrange other structural components in the drying device 2000. In other aspect, in order to improve the overall drying efficiency, the area of the hygroscopic and dehumidifying rotary wheel 2201 needs to be increased to improve the hygroscopic and dehumidifying capacity of the hygroscopic and dehumidifying rotary wheel 2201. Therefore, the area of the hygroscopic and dehumidifying rotary wheel 2201 should be set as large as possible. In this embodiment, the ratio of the diameter of the hygroscopic and dehumidifying rotary wheel 2201 to the diameter of the inner drum is set to 1:2 to 3:4, such that both the overall structure size and the overall drying efficiency of the laundry treating apparatus can be taken into account (the drying efficiency is improved by improving the hygroscopic and dehumidifying capacity).

In an embodiment, the size of the diameter of the outer drum is further selected after the diameter of the inner drum is determined. For instance, the diameter of the inner drum is set to 600 mm and the diameter of the outer drum is set to 800 mm. For instance, the diameter of the inner drum is set to 510 mm and the diameter of the outer drum is set to 680 mm. The drying device 2000 and the laundry accommodating device 1100 are communicated with each other through the air exhaust pipe 1300. Therefore, the diameters of the inner drum, the outer diameter and the hygroscopic and dehumidifying rotary wheel 2201 should be set such that the air in the inner drum (the laundry accommodating device 1100) can be smoothly discharged to the hygroscopic and dehumidifying rotary wheel 2201 (the drying device 2000). Of course, in order to smoothly discharge the air from the inner drum to the hygroscopic and dehumidifying rotary wheel 2201, the cooperation of other structural components is also required. For instance, it is necessary for the air exhaust pipe 1300 to have an appropriate inner diameter (such that a certain air exhaust volume can be achieved in a unit time), the hygroscopic and dehumidifying rotary wheel 2201 to have a good hygroscopic and dehumidifying effect, the circulating fan 2100 to operate at a suitable power, and so on. For instance, when the diameter of the inner drum is set to 510 mm, the diameter of the hygroscopic and dehumidifying rotary wheel 2201 is set to 320 mm.

In this embodiment, the laundry volume/weight in the inner drum, the air exhaust volume of the air exhaust pipe 1300, the hygroscopic and dehumidifying effect of the hygroscopic and dehumidifying rotary wheel 2201 and other conditions are considered, and the diameters of the inner drum, the outer drum and the hygroscopic and dehumidifying rotary wheel 2201 are reasonably structured, such that the air in the inner drum can be smoothly discharged to the hygroscopic and dehumidifying rotary wheel 2201 under the effective cooperation of multiple parameters, thereby effectively improving the hygroscopic and dehumidifying efficiency.

In an embodiment, the settings of the first power and the second power may be adjusted in combination with the ratio of thickness to diameter of the hygroscopic and dehumidifying rotary wheel 2201 and the and the rotational speed of the hygroscopic and dehumidifying rotary wheel 2201. For instance, in the case that the rotational speed of the hygroscopic and dehumidifying rotary wheel 2201 is increased, the first power and/or the second power may be increased appropriately. In an embodiment, the power ratio of the first power to the second power is 2: 1 to 4:1. For instance, the hygroscopic and dehumidifying rotary wheel 2201 has the thickness of 25 mm and the diameter of 320 mm. The rotational speed of the hygroscopic and dehumidifying rotary wheel 2201 is 5 rpm. The first power is set to 40W and the second power is set to 10W. For instance, the hygroscopic and dehumidifying rotary wheel 2201 has the thickness of 25 mm and the diameter of 320 mm. The rotational speed of the hygroscopic and dehumidifying rotary wheel 2201 is 6 rpm. The first power is set to 50 W and the second power is set to 12 W. For another instance, the hygroscopic and dehumidifying rotary wheel 2201 has the thickness of 25 mm and the diameter of 320 mm. The rotational speed of the hygroscopic and dehumidifying rotary wheel 2201 is 7 rpm. The first power is set to 60 W and the second power is set to 18 W.

In this embodiment, adjustments may be made according to the actual operational condition of the laundry treating apparatus in combination with the settings of the ratio of the thickness to the diameter of the hygroscopic and dehumidifying rotary wheel 2201, the rotational speed of the hygroscopic and dehumidifying rotary wheel 2201, and the magnitudes of the first power and the second power, and their cooperation relationship is not uniquely definite.

In an embodiment, under the premise that the ratio of the thickness to the diameter of the hygroscopic and dehumidifying rotary wheel 2201 is set to 1:20 to 1:5 and the rotational speed of the hygroscopic and dehumidifying rotary wheel 2201 is 2 rpm to 10 rpm, the condensing module 2600 is further arranged. For instance, the ratio of the thickness to the diameter of the hygroscopic and dehumidifying rotary wheel 2201 is set to 1:15, the rotational speed of the hygroscopic and dehumidifying rotary wheel 2201 is 7 rpm, and the flow rate of condensate is 0.4 L/min. With different ratios of the thickness to the diameter and different rotational speeds, the parameter settings of the condensing module 2600 are reasonably adjusted, such that the high-temperature and high-moisture airflow can be orderly converted to the low-temperature dry airflow, thereby improving the drying efficiency.

In the current related technologies, only the direct operating temperature of the drying device 2000 in the heating and drying process is considered, and there is not consideration given to the change relationship between the temperature in the laundry accommodating device 1100 or in the vicinity of the first airflow outlet and the temperature in the vicinity of the first airflow inlet. Moreover, the applicant found that the drying efficiency could be improved when the temperature in the laundry accommodating device 1100 or in the vicinity of the first airflow outlet is controlled to satisfy a certain relationship with the temperature in the vicinity of the first airflow inlet.

In a group of embodiments, the laundry treating apparatus further includes a first temperature detection device (not sown) and a second temperature detection device (not shown). The first temperature detection device is arranged in the vicinity of the first airflow inlet and structured to detect a temperature of an airflow entering the laundry accommodating device 1100. The second temperature detection device is arranged in the laundry accommodating device 1100 or in the vicinity of the first airflow outlet and structured to detect a temperature of an airflow in the laundry accommodating device 1100 or a temperature of an airflow flowing out of the laundry accommodating device 1100.

The difference between a first detection temperature detected by the first temperature detection device and a second detection temperature detected by the second temperature detection device is between 18°C and 30°C at least in one stage of a working process (for instance, in the heating and drying stage of the drying process) of the laundry treating apparatus. The first detection temperature may be understood as a temperature value at any point in a temperature field on a cross section of the first airflow inlet. The second detection temperature may be understood as a temperature value at any point in the temperature field on the cross section of the first airflow outlet, or a temperature value at any point in the laundry accommodating device 1100.

In this embodiment, the laundry accommodating device includes an air exhaust pipe 1300 that communicates the laundry accommodating device 1100 with the drying device 2000. The air exhaust pipe 1300 is constructed to direct the airflow from the laundry accommodating device 1100 to the drying unit 2000. At least in one stage of the working process of the laundry treating apparatus, a moist airflow in the laundry accommodating device 1100 continuously flows to the hygroscopic and dehumidifying rotary wheel 2201. The hygroscopic and dehumidifying rotary wheel 2201 absorbs moisture from the moist airflow and transports a dry airflow to the laundry accommodating device 1100, so as to achieve system stability (a change state of temperature remaining basically stable). In this embodiment, the difference between the first detection temperature and the second detection temperature is ensured to range between 18°C and 30°C by using the first temperature detection device and the second temperature detection device to detect the first detection temperature and the second detection temperature, respectively, such that the laundry in the laundry accommodating device 1100 can be stably heated and dried to steadily improve the drying efficiency of the drying device 2000.

In an embodiment, the first detection temperature is between 70°C to 85°C, and the second detection temperature is between 50°C to 60°C. In an embodiment, the first detection temperature is between 73°C to 82°C, and the second detection temperature is between 53°C to 56°C. In an embodiment, the first detection temperature is 75°C, the second detection temperature is 53°C, and the difference between the first detection temperature and the second detection temperature is 22°C. In an embodiment, the first detection temperature is 80°C, the second detection temperature is 55°C, and the difference between the first detection temperature and the second detection temperature is 25°C. In an embodiment, the first detection temperature is 73°C, the second detection temperature is 53°C, and the difference between the first detection temperature and the second detection temperature is 20°C. In an embodiment, the first detection temperature is 70°C, the second detection temperature is 52°C, and the difference between the first detection temperature and the second detection temperature is 18°C.

In this embodiment, when the temperature difference between the first detection temperature and the second detection temperature is kept at 18°C to 30°C, the range of the first detection temperature and the range of the second detection temperature are further set, such that the drying device 2000 of the laundry treating apparatus may operate within 85°C, thereby allowing the laundry in the drum to be dried in a low-temperature range.

In an embodiment, the heating module 2100 operates between the first heating power of 650 W and the second heating power of 1450 W and is structured to carry out moisture removal on the moisture removing space. The condensing module 2600 is a water-cooled condenser, with a water flow rate of 0.38 L/min.

In this embodiment, the temperature difference between the first detection temperature and the second detection temperature is kept at 18°C to 30°C by setting the power change of the heating module 2100 to cooperate the condensation of the condensing module 2600. As for the specific change range or form in the first heating power and the second heating power, the heating power provided by any of the above embodiments may be used.

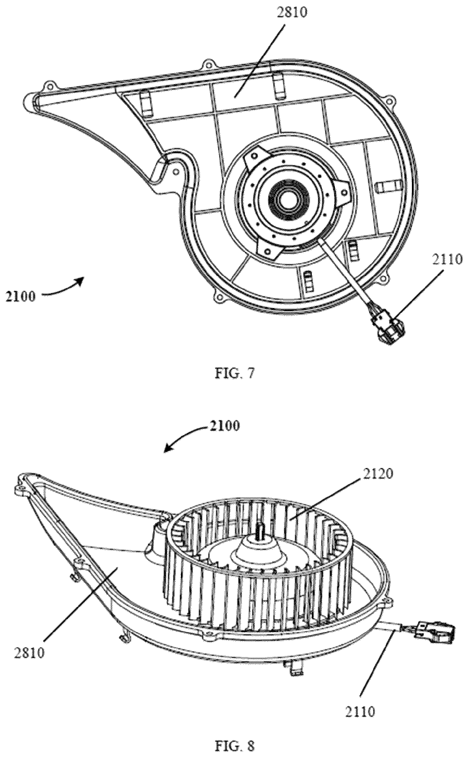

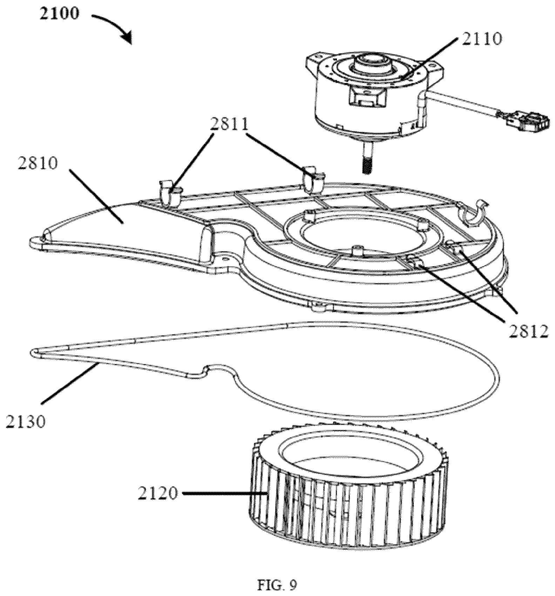

FIGs. 7 to 9 show top, bottom and exploded views of a circulating fan 2100, respectively. As shown in FIGs. 7 to 15, the circulating fan 2100 includes a motor 2110, an upper casing 2810, a fan impeller 2120 and a sealing washer 2130.

According to some embodiments, the upper casing 2810 is in the shape of a volute casing, conforms to the fluid design requirements, and may be used as a flow passage to provide the maximum air volume and velocity to the moisture absorbing passage of the drying device 2000. The upper casing 2810 is provided with pipe path fixing clips 2811 for fixing a pipe path and line fixing clips 2812 for fixing lines (e.g., a power cord of a motor 2110, a control line or the like). The motor 2110 and the upper casing 2810 may be fixed with screws.

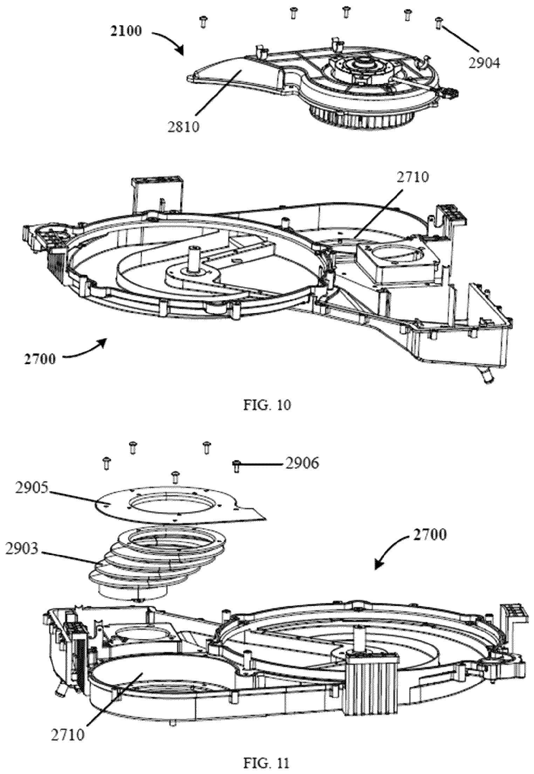

FIG. 10 shows the cooperation mode between the circulating fan 2100 and the integrated lower casing 2700 of the drying device 2000. As shown in FIG. 10, the upper casing 2810 may be fixed to the mounting portion 2710 through screws 2904, so as to fixedly connect the circulating fan 2100 to the lower casing 2700. The sealing washer 2130 is located at a connection between the upper casing 2810 and the mounting portion 2710. According to some embodiments, in order to facilitate the mounting of the circulating fan 2100 to the lower casing 2700 and to improve the airtightness of the circulating fan 2100, a recessed slot (not shown in FIG. 10) for placing the sealing washer 2130 may be formed at the edge of the mounting portion 2710 or at the edge of the upper casing 2810.

According to some embodiments, the air inlet of the circulating fan 2100 may be the first air inlet 2901 of the moisture absorbing passage. Accordingly, the air inlet of the circulating fan 2100 may be communicated with the air exhaust pipe of the inner drum through the flexible pipe 2903. According to some embodiments, as shown in FIG. 11, the flexible pipe 2903 and a pressing plate 2905 may be connected by means of positioning pins, the pressing plate 2905 is fixed to the mounting portion 2710 of the lower casing 2700 by means of screws 2906, such that the flexible pipe 2903 is connected to the air inlet of the circulating fan 2100, and the other end of the flexible pipe 2903 can also be connected to the air outlet of the air exhaust pipe in the same way.

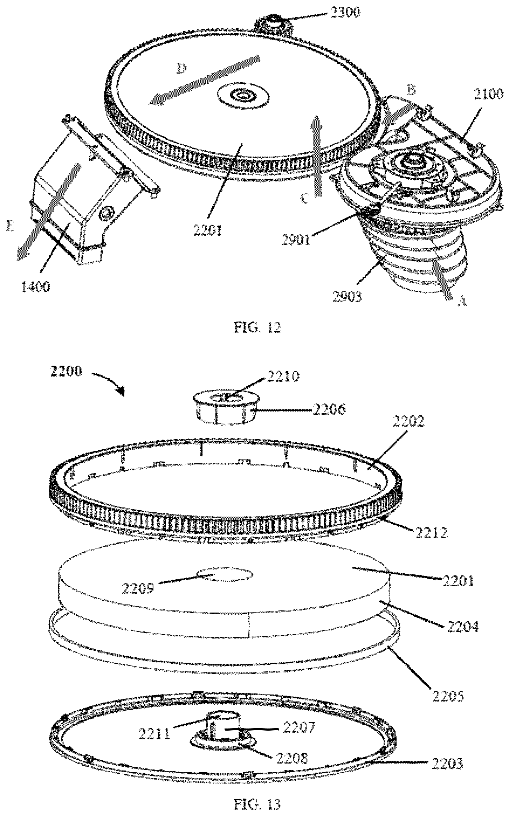

Under the action of the circulating fan 2100, a circulating airflow may be formed between the moisture absorbing passage and the inner drum. FIG. 12 shows the flow direction of a circulating airflow according to an embodiment of the present disclosure. As shown in FIG. 12, under the action of the circulating fan 2100, the airflow in the inner drum sequentially passes through the air exhaust pipe (which is provided with a filter therein) of the inner drum and the flexible pipe 2903 to enter the first air inlet 2901 of the moisture absorbing passage, i.e., entering the air inlet of the circulating fan 2100 (as shown by arrow A). The airflow flows from the air outlet of the circulating fan 2100 to the lower side of the hygroscopic and dehumidifying rotary wheel 2201 (as shown by arrow B), passes through the hygroscopic and dehumidifying rotary wheel 2201 to reach the upper side of the hygroscopic and dehumidifying rotary wheel 2201 (as shown by arrow C), flows in a space above the hygroscopic and dehumidifying rotary wheel 2201 (corresponding to the moisture absorbing region/space) (as shown by arrow D), and enters the inner drum through the first air outlet 2902 of the moisture absorbing passage and the connector 1400 (as shown by arrow E).

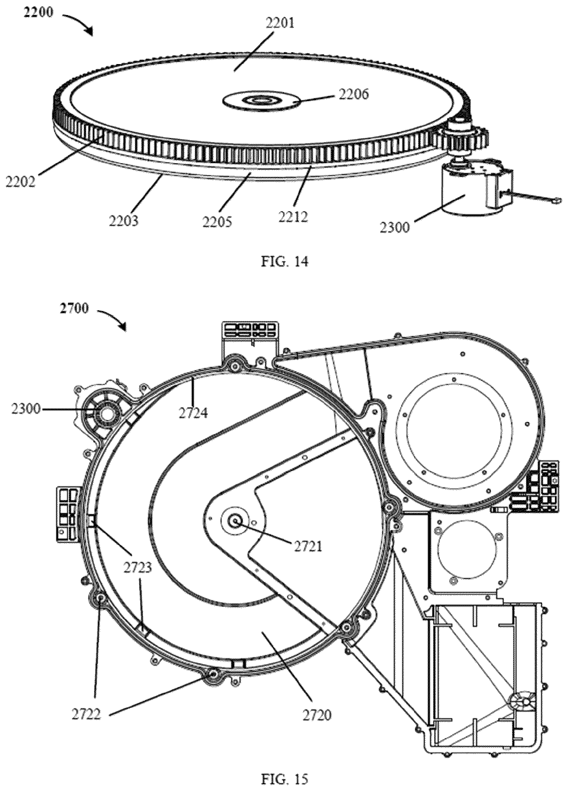

FIGs. 13 and 14 show an exploded view and a post-assembling perspective view of a hygroscopic and dehumidifying assembly 2200, respectively. FIG. 15 shows a top view of the lower casing 2700.

According to some embodiments, as shown in FIG. 13, the hygroscopic and dehumidifying assembly 2200 includes the hygroscopic and dehumidifying rotary wheel 2201, an outer-periphery upper clamping casing 2202, an outer-periphery lower clamping casing 2203 and a circumferential shock absorber 2204. The circumferential shock absorber 2204 is arranged on the outer periphery of the hygroscopic and dehumidifying rotary wheel 2201, or on the inner periphery wall(s) of the outer-periphery upper clamping casing 2202 and/or the outer-periphery lower clamping casing 2203. The outer-periphery upper clamping casing 2202 and the outer-periphery lower clamping casing 2203 clamp and fix the hygroscopic and dehumidifying rotary wheel 2201 and the circumferential shock absorber 2204. Clamping and fixing may be achieved, for example, by means of clamping buckles, screws, gluing or the like.

The circumferential shock absorber 2204 may be made of, for example, foam, soft rubber, felt strips or other materials. The circumferential shock absorber 2204 is attached to the outer periphery of the hygroscopic and dehumidifying rotary wheel 2201, or to the inner periphery wall(s) of the outer-periphery upper clamping casing 2202 and/or the outer-periphery lower clamping casing 2203. Thus, a cushion can be formed between the outer ring of the hygroscopic and dehumidifying rotary wheel 2201 and the inner rings of the outer-periphery upper clamping casing 2202 and the outer-periphery lower clamping casing 2203, so as to protect the hygroscopic and dehumidifying rotary wheel 2201, and prevent the hygroscopic and dehumidifying rotary wheel 2201 (in particular, when the hygroscopic and dehumidifying rotary wheel 2201 is made of fragile materials such as a molecular sieve ) from being damaged cause by its collisions with the outer-periphery upper clamping casing 2202 and/or the outer-periphery lower clamping casing 2203 during rotation.

According to some embodiments, as shown in FIGs. 13 and 14, a first sealing ring 2205 is arranged at the joint between the outer-periphery upper clamping casing 2202 and the outer-periphery lower clamping casing 2203, or on the outer periphery of the outer-periphery upper clamping casing 2202, or on the outer periphery of the outer-periphery lower clamping casing 2203. The first sealing ring 2205 may be made of, for example, foam, soft rubber, felt strips or other materials. The first sealing ring 2205 may seal the joint between the outer-periphery upper clamping casing 2202 and the outer-periphery lower clamping casing 2203 in one aspect, and may form a rotating seal with a casing sealing ring 2724 arranged in the first mounting portion 2720 of the lower casing 2700 in other aspect, such that most of the moist airflow flowing upward from the inner drum may be absorbed after passing through the hygroscopic and dehumidifying rotary wheel 2201, without leakage from a gap between the outer periphery of the hygroscopic and dehumidifying rotary wheel 2201 and the inner periphery of the lower casing 2700, thereby guaranteeing the moisture absorbing effect.

According to some embodiments, as shown in FIGs. 13 and 14, the hygroscopic and dehumidifying assembly 2200 further includes a central upper clamp 2206, a central lower clamp 2207 and a central end-face shock absorber 2208. The center of the hygroscopic and dehumidifying rotary wheel 2201 is provided with a first hole 2209, the center of the central upper clamp 2206 is provided with a second hole 2210, and the center of the central lower clamp 2207 is provided with a third hole 2211. The central upper clamp 2206 and the central lower clamp 2207 pass through the first hole 2209 to clamp and fix the hygroscopic and dehumidifying rotary wheel 2201. Clamping and fixing may be achieved, for example, by means of clamping buckles, screws, gluing or the like. The first hole 2209, the second hole 2210 and the third hole 2211 all sleeve the short shaft 2721 at the center of the first mounting portion 2720 of the lower casing 2700, such that the hygroscopic and dehumidifying assembly 2200 is rotatably connected to the lower casing 2700. The central end-face shock absorber 2208 sleeves the central lower clamp 2207 and is located between the central lower clamp 2207 and the hygroscopic and dehumidifying rotary wheel 2201, and is structured to protect the hygroscopic and dehumidifying rotary wheel 2201 and prevent the hygroscopic and dehumidifying rotary wheel 2201 from being damaged caused by its frictions with the central lower clamp 2207 during rotation.

According to some embodiments, as shown in FIGs. 13 and 14, driving teeth are arranged on the outer periphery of the outer-periphery upper clamping casing 2202. The driving part 2300 for the hygroscopic and dehumidifying rotary wheel may be a driving motor, and the output end of the driving motor is provided with a gear. The gear of the driving motor is meshed with the driving teeth on the outer-periphery upper clamping casing 2202 to drive the hygroscopic and dehumidifying assembly 2200 to rotate. A belt groove may also be formed on the outer periphery of the outer-periphery upper clamping casing 2202, and the driving motor drives, in a belt drive mode, the hygroscopic and dehumidifying assembly 2200 to rotate.

It should be noted that the driving mode of the hygroscopic and dehumidifying assembly 2200 is not limited to the outer-periphery driving mode shown in FIG. 14. In other embodiments, other modes may also be used to drive the hygroscopic and dehumidifying assembly 2200 to rotate. For example, the output end of the driving part 2300 for the hygroscopic and dehumidifying rotary wheel may also be connected to the central upper clamp 2206 or the center lower clamp 2207, and the hygroscopic and dehumidifying assembly 2200 is driven to rotate by driving the central upper clamp 2206 or the central lower clamp 2207. That is, the hygroscopic and dehumidifying assembly 2200 is driven to rotate in a central driving mode. In general, in the central driving mode, it is necessary to arrange the driving part 2300 for the hygroscopic and dehumidifying rotary wheel in a direction perpendicular to (above or below) the hygroscopic and dehumidifying assembly 2200. In the outer-periphery driving mode shown in FIG. 14, the driving part 2300 for the hygroscopic and dehumidifying rotary wheel and the hygroscopic and dehumidifying assembly 2200 are horizontally arranged. It is understandable that, compared with the outer-periphery driving mode, the central driving mode leads to much space occupied in the vertical direction, which increases the height and volume of the washer-dryer machine. However, the central driving mode may allow the driving part 2300 for the hygroscopic and dehumidifying rotary wheel to directly drive the hygroscopic and dehumidifying assembly 2200 to rotate, instead of driving the hygroscopic and dehumidifying assembly 2200 by a gear or belt additionally arranged at the output end of a driving mechanism as in the outer-periphery driving mode. In this way, the structure of the driving part 2300 for the hygroscopic and dehumidifying rotary wheel can be simplified, and the torque of the central shaft can be reduced. Those skilled in the art may choose, according to actual needs, an appropriate driving mode to drive the hygroscopic and dehumidifying assembly 2200 to rotate.

According to some embodiments, as shown in FIGs. 13 and 14, an auxiliary rotating ring 2212 is arranged on the outer periphery of the outer-periphery upper clamping casing 2202. As shown in FIG. 15, the first mounting portion 2720 for mounting the hygroscopic and dehumidifying assembly 2200 is arranged on the lower casing 2700, and flexible rollers 2722 are arranged on the inner side wall of the first mounting portion 2720. The flexible rollers 2722 may be arranged, for example, on outward projecting mounting portions on the inner side wall of the first mounting portion 2720. The rotating shafts of the flexible rollers 2722 are parallel to the rotating shaft of the hygroscopic and dehumidifying assembly 2200.

During the rotation of the hygroscopic and dehumidifying assembly 2200, the auxiliary rotating ring 2212 is in rolling cooperation with the flexible rollers 2722, such that the stable rotation of the hygroscopic and dehumidifying assembly 2200 can be ensured, and the sliding friction between the hygroscopic and dehumidifying assembly 2200 and the inner ring of the lower casing 2700 can be eliminated. The diameter of each flexible roller 2722 is elastically variable. That is, when each flexible roller 2722 is radially extruded, the distance between an extrusion point and the rotating shaft of the flexible roller 2722 is variable. During the rotation of the hygroscopic and dehumidifying assembly 2200, in the case where the rotating shaft of the hygroscopic and dehumidifying assembly 2200 is offset relative to the short shaft 2721, the auxiliary rotating ring 2212 may extrude the flexible rollers 2722 to cause the deformation of the flexible rollers 2722, without producing a sliding friction force due to the resistance between the auxiliary rotating ring 2212 and the flexible rollers 2722. The cooperation between the auxiliary rotating ring 2212 and the flexible rollers 2722 may reduce a collision between the hygroscopic and dehumidifying assembly 2200 and the inner ring of the lower casing 2700 caused by the unstable and uneven rotation of the hygroscopic and dehumidifying assembly 2200, and avoid damaging the hygroscopic and dehumidifying assembly 2200 (in particular the hygroscopic and dehumidifying rotary wheel 2201) due to the collision.

It should be noted that, in addition to the arrangement of the auxiliary rotating ring 2212 on the outer periphery of the outer-periphery upper clamping casing 2202 as shown in FIGs. 13 and 14, the auxiliary rotating ring 2212 may also be arranged on the outer periphery of the outer-periphery lower clamping casing 2203. In addition, the number of flexible rollers 2722 is not limited in the embodiments of the present disclosure. Those skilled in the art may arrange five (as shown in FIG. 15) or more or fewer flexible rollers 2722.

According to some embodiments, as shown in FIG. 15, the bottom surface of the first mounting portion 2720 is provided with rigid rollers 2723. The rigid rollers 2723 may, for example, be arranged at the edge of the bottom surface of the first mounting portion 2720. The diameter of each rigid roller 2723 is constant. The rotating shaft of each rigid roller 2723 is perpendicular to the rotating shaft of the hygroscopic and dehumidifying assembly 2200. During the rotation of the hygroscopic and dehumidifying assembly 2200, the rigid rollers 2723 may be in rolling cooperation with the lower surface of the outer-periphery lower clamping casing 2203 to support the outer-periphery lower clamping casing 2203, and eliminate the friction between the hygroscopic and dehumidifying assembly 2200 and the bottom surface of the lower casing 2700.

It should be noted that the number of rigid rollers 2723 is not limited in the embodiments of the present disclosure. Those skilled in the art may arrange four (as shown in FIG. 15) or more or fewer rigid rollers 2723.

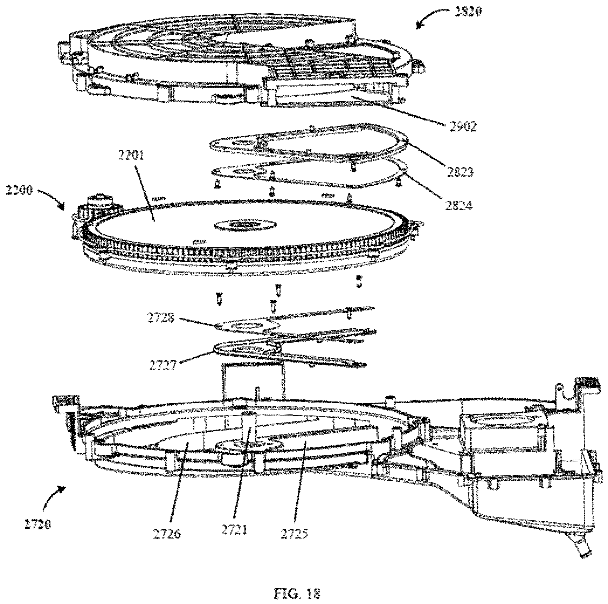

FIGs. 16 and 17 show exploded views of a first mounting portion 2720 of the lower casing and an upper casing 2820 for mounting the hygroscopic and dehumidifying assembly 2200, respectively. FIG. 18 shows an exploded mounting view of the first mounting portion 2720, the upper casing 2820, and the hygroscopic and dehumidifying assembly 2200.

According to some embodiments, as shown in FIGs. 16 to 18, the lower casing 2700 of the drying device 2000 may be an integrated lower casing, on which the first mounting portion 2720 for mounting the hygroscopic and dehumidifying assembly 2200 is arranged. The drying device 2000 further includes a separate upper casing 2820 for mounting the hygroscopic and dehumidifying assembly 2200. The upper casing 2820 further includes a first air outlet 2902 of the moisture absorbing passage, in addition to a circular second mounting portion 2821 for mounting the hygroscopic and dehumidifying assembly 2200. The hygroscopic and dehumidifying assembly 2200 is rotatably connected to the short shaft 2721 of the first mounting portion 2720, such that the hygroscopic and dehumidifying assembly 2200 is rotatably connected in an approximately cylindrical space defined by the first mounting portion 2720 and the second mounting portion 2821.

According to some embodiments, as shown in FIGs. 16 to 24, the first mounting portion 2720 is provided with a first separator 2725, and the second mounting portion 2821 is provided with a second separator 2822. After the lower casing 2700 is fixedly connected to the upper casing 2820, the second separator 2822 is located directly above the first separator 2725, such that the cylindrical space where the hygroscopic and dehumidifying assembly 2200 is located is separated into a moisture absorbing region 2907 and a regenerating region 2908. That is, the first separator 2725 and the second separator 2822 may separate the hygroscopic and dehumidifying rotary wheel 2201 into the moisture absorbing region 2907 and the regenerating region 2908. A circulating airflow flows from the bottom of the hygroscopic and dehumidifying rotary wheel 2201 into the moisture absorbing region 2907 of the hygroscopic and dehumidifying rotary wheel 2201, and the moisture absorbing region 2907 is structured to absorb moisture from the circulating airflow. The moisture removing airflow flows from the top of the hygroscopic and dehumidifying rotary wheel 2201 into the regenerating region 2908 of the hygroscopic and dehumidifying rotary wheel 2201, such that the moisture absorbed by the hygroscopic and dehumidifying rotary wheel 2201 is removed by means of the moisture removing airflow, thereby enabling the regeneration and reuse of the hygroscopic and dehumidifying rotary wheel 2201.

According to some embodiments, as shown in FIGs. 16 and 18, the first mounting portion 2720 of the lower casing 2700 is further provided with at least one third separator 2726. The at least one third separator 2726 separates the moisture absorbing region 2907 into at least two portions, namely, a first moisture absorbing region 2907-1 and a second moisture absorbing region 2907-2, such that the circulating airflow flowing into the moisture absorbing region 2907 can be separated. After entering the space between the lower casing 2700 and the hygroscopic and dehumidifying assembly 2200 via the circulating fan, the circulating airflow is relatively evenly separated into at least two portions (that is, the airflow rates of the two portions are about the same) by the third separator 2726, such that a case where the airflow close to the center of circle is less caused by the fact that much circulating airflow flows to the circumference of the hygroscopic and dehumidifying assembly 2200 under the action of a centrifugal force is avoided. According to this embodiment, the moisture absorbing efficiency of the hygroscopic and dehumidifying assembly 2200 can be improved, and uniform and stable moisture absorption can be achieved.

According to some embodiments, as shown in FIGs. 16 and 18, first seals are arranged between the hygroscopic and dehumidifying assembly 2200 and the first separator 2725 of the lower casing 2700, and are fixed to the upper end surface of the first separator 2725 (e.g., by means of screws, clamping buckles, gluing or the like). The first seals may include, for example, a sealing strip 2728 and a metal pressing sheet 2727. The sealing strip 2728 may be made of, for example, rubber, foam, felt strips or other materials. The metal pressing sheet 2727 may be connected to the sealing strip 2728 by means of screws or gluing, and the sealing strip 2728 is fixed to the first separator 2725.

Similar to the above embodiment, as shown in FIGs. 17 and 18, second seals are arranged between the hygroscopic and dehumidifying assembly 2200 and the second separator 2822 of the upper casing 2820, are fixed to the lower end surface of the second separator 2822 (e.g., by means of screws, buckles, gluing or the like), and are located directly above the first seals 2727 and 2728. The second seals may include, for example, a seal ring 2824 and a metal pressing sheet 2823. The sealing ring 2824 may be made of, for example, rubber, foam, felt strips or other materials. The metal pressing sheet 2823 may be connected to the sealing ring 2824 by means of screws or gluing, and the sealing ring 2824 is fixed to the second separator 2822.

With the first seals 2727 and 2728 and the second seals 2823 and 2824, the dynamic sealing between the hygroscopic and dehumidifying assembly 2200 and the lower casing 2700 can be achieved. That is, during the rotation of the hygroscopic and dehumidifying assembly 2200, the moisture absorbing region 2907 and the regenerating region 2908 are separated and kept sealed relative to each other. The circulating airflow from the moisture absorbing region 2907 passes as little as possible through the first separator 2725 and the second separator 2822 to the regenerating region 2908, and the moisture removing airflow from the regenerating region 2908 passes as little as possible through the first separator 2725 and the second separator 2822 to the moisture absorbing region 2907.

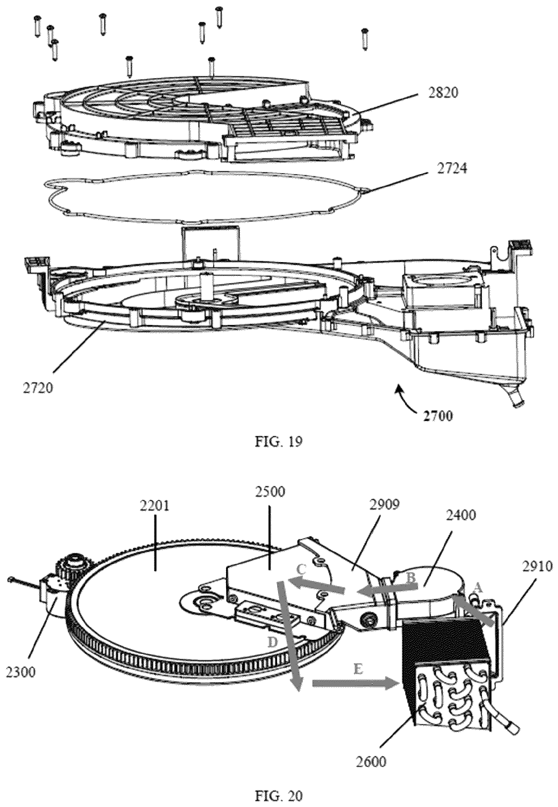

According to some embodiments, the spacing between the first seals and the second seals, in particular between the sealing strip 2728 and the hygroscopic and dehumidifying assembly 2200 and between the sealing ring 2824 and the hygroscopic and dehumidifying assembly 2200, may be set to a reasonably smaller range of, for example, 0.2 mm to 5 mm, or 0.6 mm to 0.8 mm, which is relatively easy to implement. In this way, during the rotation of the hygroscopic and dehumidifying rotary wheel, the hygroscopic and dehumidifying rotary wheel does not come into contact with the first seals and the second seals, which avoids the increase of the rotational resistance, and achieves a better dynamic sealing effect. FIG. 19 shows an exemplary fixing mode between an integrated lower casing 2700 and the upper casing 2820 of the hygroscopic and dehumidifying assembly 2200. As shown in FIG. 19, a casing sealing ring 2724 is arranged at the connection between the upper casing 2820 and the first mounting portion 2720 of the lower casing 2700. The casing sealing ring 2724 is structured to guarantee the airtightness of the space where the hygroscopic and dehumidifying assembly 2200 is located. The casing sealing ring 2724 may be, for example, a rubber gasket, a silicone gasket or the like. A groove for mounting the casing sealing ring 2724 is arranged in the upper casing 2820 or the first mounting portion 2720 of the lower casing 2700. The casing sealing ring 2724 is mounted to this groove, and the upper casing 2820 and the first mounting portion 2720 are buckled and then fastened by means of bolts.

Referring to FIG. 6, a mounting portion 2730 for mounting the regenerating fan 2400 is arranged on the integrated lower casing 2700 of the drying device 2000. The mounting portion 2730 may be matched with a separate upper casing corresponding to the regenerating fan 2400 to fix the regenerating fan 2400 in the mounting portion 2730 of the lower casing 2700. The regenerating fan 2400 may be, for example, a fan module that has already been packaged.

Under the action of the regenerating fan 2400, a moisture removing airflow may be formed in the regenerating passage. FIG. 20 shows the flow direction of a moisture removing airflow. As shown in FIG. 20, under the action of the regenerating fan 2400, the moisture removing airflow enters the air inlet of the regenerating fan 2400 (as shown by arrow A), passes through the regenerating fan 2400, and enters the heating module 2500 through a first connector 2909 (as shown by arrows B and C). The heating module 2500 is located above the regenerating region of the hygroscopic and dehumidifying rotary wheel 2201. After flowing into the heating module 2500, the moisture removing airflow passes through the regenerating region of the hygroscopic and dehumidifying rotary wheel 2201 from the top down (as shown by arrow D), and then flows into the condensing module 2600 (as shown by arrow E). The air outlet of the outer casing of the condensing module 2600 (not shown in FIG. 20) is communicated with the air inlet of the regenerating fan 2400 through a second connector 2910, such that the regenerating passage forms a closed loop. The moisture removing airflow condensed by the condensing module 2600 flows into the air inlet of the regenerating fan 2400 again through the second connector 2910 (as shown by arrow A), such that the moisture removing airflow can circulate in the regenerating passage. The closed-loop regenerating passage can avoid the interaction between the moisture removing airflow and the external environment of the washer-dryer machine, thereby reducing the impact on the external environment (e.g., affecting the moisture of the outside air or the like).

In other embodiments, the regenerating passage may also be an open-loop passage. For example, in the foregoing embodiments shown in FIGs. 1 and 5, the side face of the outer casing 10 of the washer-dryer machine is provided with a second air outlet 102 and a second air inlet 103. The second air outlet 102 is communicated with an air outlet end 621 of the regenerating passage 202, and the second air inlet 103 is communicated with an air inlet end 622 of the regenerating passage 202. In this embodiment, at least one of the air outlet end 621 and the air inlet end 622 is provided with the condensing module. Here, in the case of the condensing module arranged at the air outlet end 621, the moisture removing airflow exhausted to the outside can be condensed and dried by the condensing module 622, such that the humidity of the airflow exhausted to the outside is reduced, thereby avoiding the impact on the external environment. In a case of the condensing module 622 arranged at the air inlet end, an external airflow flowing into the regenerating passage can be dried by the condensing module 622, such that the moisture removing effect of the regenerating region is improved.

According to some embodiments, an electrically assisted heating component may be arranged at the air inlet end 622. The electrically assisted heating component is structured to preheat the moisture removing airflow flowing into the regenerating passage 202, so as to improve the moisture removing effect of the regenerating region.

During the rotation of the hygroscopic and dehumidifying rotary wheel 2201, each portion of the hygroscopic and dehumidifying rotary wheel 2201 rotates from the moisture absorbing passage to the regenerating passage, and then rotates from the regenerating passage to the moisture absorbing passage, such that the portion of the hygroscopic and dehumidifying rotary wheel 2201 located in the moisture absorbing region absorbs the moisture from the moist circulating airflow in the moisture absorbing passage, and then rotates to the regenerating region. The heating module 2500 heats this portion to rapidly desorb the moisture from this portion into the moisture removing airflow, such that the moisture removing airflow turns into a high-temperature airflow containing water vapor (i.e., high-temperature moisture-containing airflow). The condensing module 2600 condenses the high-temperature moisture-containing airflow into a low-temperature dry airflow, and discharges condensate from the condensing module 2600 through a condensate outlet. The low-temperature dry airflow resulting from treatment by the condensing module 2600 reenters the air inlet of the regenerating fan 2400 (corresponding to the above-mentioned closed-loop regenerating passage) or is discharged to the outside (corresponding to the above-mentioned open-loop regenerating passage).

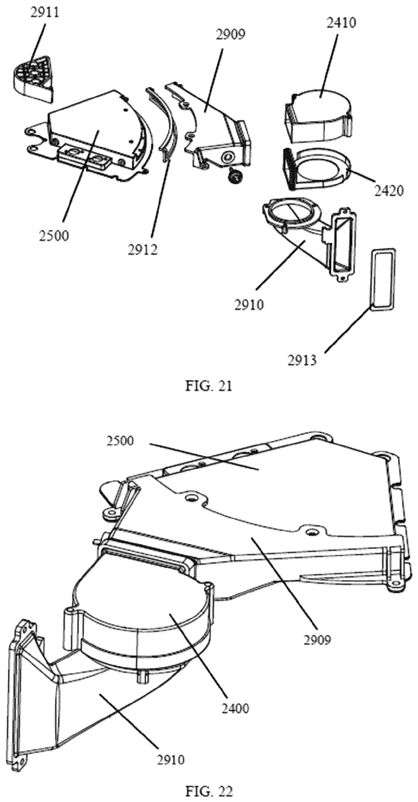

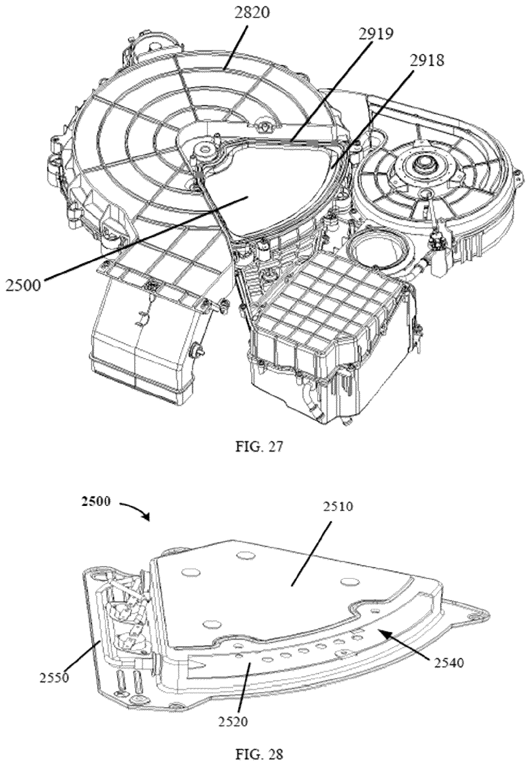

The heating module 2500 is arranged above the regenerating region of the hygroscopic and dehumidifying rotary wheel 2201 and covers the regenerating region. FIGs. 21 and 22 show exploded and perspective views of structures related to a heating module 2500 and a regenerating fan 2400, respectively. As shown in FIGs. 20 to 28, the regenerating fan 2400 is fixed in the upper casing 2410 and lower casing 2420 of the regenerating fan. The heating module 2500 is communicated with the air outlet of the regenerating fan 2400 through a first connector 2909. A first sealing washer 2912 is arranged at a connection between the heating module 2500 and the first connector 2909. The heating module 2500 may be connected to the upper casing of a module corresponding to the hygroscopic and dehumidifying assembly through a third connector 2911. For example, the heating module is connected to a sector-shaped notch of an upper end surface of the upper casing 2820 as shown in FIG. 18. The air inlet of the regenerating fan 2400 is connected to an outer casing of the condensing module 2600 through a second connector 2910 (not shown in FIGs. 21 and 28). A second sealing washer 2913 is arranged at a connection between the second connector 2910 and the outer casing of the condensing module 2600.

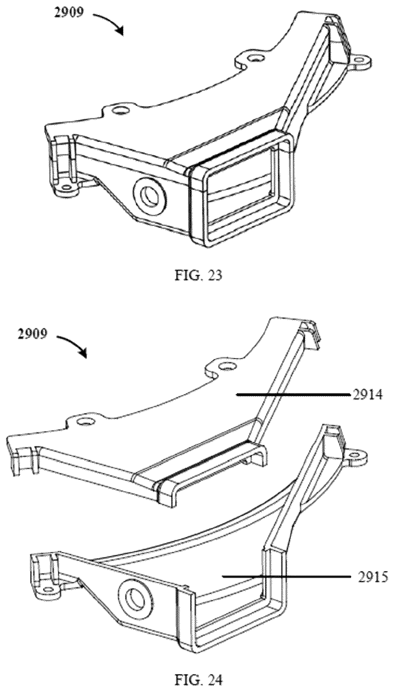

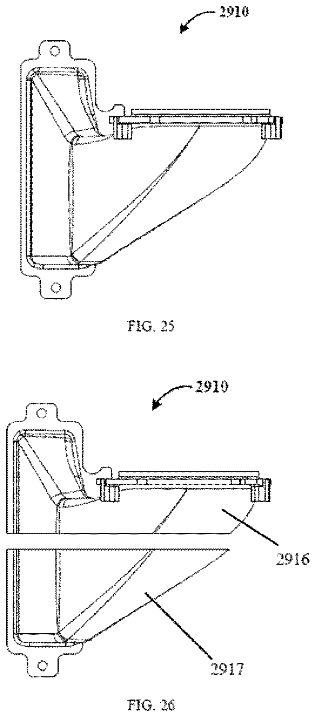

FIGs. 23 and 24 show perspective and exploded views of a first connector 2909, respectively. FIGs. 25 and 26 show perspective and exploded views of a second connector 2910, respectively. As shown in FIGs. 23 to 32, the first connector 2909 may be split into upper and lower portions, i.e., an upper portion 2914 and a lower portion 2915 of the first connector. The upper portion 2914 and the lower portion 2915 of the first connector may be machined separately, and then welded or bolted to obtain the first connector 2909. Similarly, the second connector 2910 may also be split into upper and lower portions, i.e., an upper portion 2916 and a lower portion 2917 of the second connector. The upper portion 2916 and the lower portion 2917 of the second connector may be machined separately, and then welded or bolted to obtain the second connector 2910.

By splitting each of the first connector 2909 and the second connector 2910 into two parts, the difficulty in machining the two can be reduced, and their manufacturability can be guaranteed. Moreover, the shapes of the first connector 2909 and the second connector 2910 are determined based on the structure and arrangement mode of components such as the regenerating fan 2400, the heating module 2500 and the condensing module 2600 in the regenerating passage, such that the first and second connectors can cooperate with other components in the regenerating passage to achieve the effects of sealing the regenerating passage and adjusting the flow direction of the moisture removing airflow.

The first connector 2909 may be of a flexible integrated structure, and its air inlet and outlet portions at both ends may extend, in a shape changing mode, into the air outlet of the casing of the condensing module and the air inlet of the casing of the regenerating fan, and a sealed connection is formed by bolting after the air inlet and outlet portions restore their shapes.

FIG. 27 shows a schematic diagram of the mounting position of the heating module 2500 on the upper casing 2820. As shown in FIG. 27, the heating module 2500 is arranged on the upper casing 2820, and a heat insulation ring 2918 and a second sealing ring 2919 are arranged between the heating module 2500 and the upper casing 2820. The heat insulation ring 2918 is made of a heat or thermal insulation material. In some embodiments, the heat insulation ring 2918 may be made of a metallic material. The second sealing ring 2919 may be made of silicone, rubber, foam or other materials.

As shown in FIG. 27, the second sealing ring 2919 covers the heat insulation ring 2918, and the second sealing ring 2919 is in direct contact with the upper casing 2820 and the heat insulation ring 2918. The regenerating region of the hygroscopic and dehumidifying rotary wheel is located below the heating module 2500. By arranging the heat insulation ring 2918 and the second sealing ring 2919 between the heating module 2500 and the upper casing 2820, the hygroscopic and dehumidifying rotary wheel can be spatially separated into the moisture absorbing region and the regenerating region, such that the moisture removing airflow can smoothly pass through the hygroscopic and dehumidifying rotary wheel.

It is understandable that, due to the high temperature of the heating module 2500, if the heating module 2500 is in direct contact with the upper casing 2820 (which may be made of, for example, a plastic material), it will cause deformation or damage to the upper casing 2820 over time. By providing the heat insulation ring 2918 and the second sealing ring 2919, a buffering region for temperature transfer may be formed between the heating module 2500 and the upper casing 2820, so as to prevent the upper casing 2820 from deformation or damage due to high temperature.

FIGs. 28 to 30 show a perspective view of the heating module 2500, a schematic diagram of a mesh plate 2550 and a bottom view of the heating module 2500, respectively. As shown in FIGs. 28 to 30, the heating module 2500 includes a sector-shaped casing 2510, as well as a mesh plate 2520 and a heating pipe 2530 that are arranged in the sector-shaped casing 2510. The heating pipe 2530 is arranged below the mesh plate 2520, in which a plurality of air holes 2521 is formed.

An air inlet 2540 is formed in the circumferential or radius side of the sector-shaped casing 2510, and the moisture removing airflow flowing from the first connector 2909 (see FIGs. 20 to 28) flows from the air inlet 2540 into the space above the mesh plate 2520 in the sector-shaped casing 2510, then passes through the air holes 2521 in the mesh plate 2520, is heated by the heating pipe 2530, and flows downward to the regenerating region on the hygroscopic and dehumidifying rotary wheel. The high-temperature moisture removing airflow heated by the heating pipe 2530 is capable of desorbing moisture from the regenerating region.

According to some embodiments, the diameters of the plurality of air holes 2521 in the mesh plate 2520 may not be the same completely, and may gradually decrease in the flow direction of the moisture removing airflow in the heating module 2500. Hence, the air volume can be adjusted to allow the moisture removing airflow to uniformly pass through the mesh plate 2520, such that the heating pipe 2530 can uniformly heat the moisture removing airflow. For example, as shown in FIG. 28, in the case where the air inlet 2540 is provided on the circumferential side of the sector-shaped casing 2510, the flow direction of the moisture removing airflow in the sector-shaped casing 2510 is from the circumference to the center. Accordingly, the diameters of the air holes 2521 in the mesh plate 2520 tend to decrease in the direction from the circumference to the center of the sector-shaped casing, such that the air volume can be adjusted to enable the heating pipe 2530 to uniformly heat the moisture removing airflow.

In other embodiments, the air inlet 2540 may also be provided on the radius side of the sector-shaped casing 2510. In this case, the moisture removing airflow flows in the interior of the sector-shaped casing 2510 in a direction approximately perpendicular to the radius (in a circumferential direction), in other words, in a direction from the radius side where the air inlet is located to the other radius side of the sector-shaped casing 2510. Accordingly, the diameters of the plurality of air holes 2521 in the mesh plate 2520 tend to decrease in the direction from the radius side where the air inlet is located to the other radius side. Hence, the volume of air passing through the mesh plate 2520 can be adjusted, such that the heating pipe 2530 can uniformly heat the moisture removing airflow and then the heated high-temperature moisture removing airflow can uniformly dehumidify the regenerating region of the hygroscopic and dehumidifying rotary wheel, thereby improving the moisture removing effect.

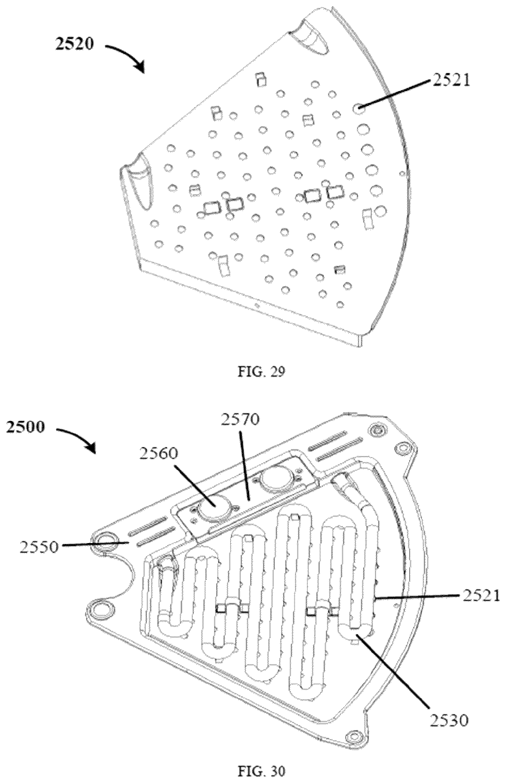

According to some embodiments, as shown in FIG. 30, the heating pipe 2530 is not arranged directly below the air holes 2521, but is offset to the direction of the center of the sector-shaped casing relative to the air holes 2521. Due to the position offset of the heating pipe 2530 relative to the air holes 2521, the heating pipe 2530 does not create a large resistance to the moisture removing airflow passing through the air holes 2521. In addition, when the moisture removing airflow enters the air inlet 2540 and passes through the air holes 2521, the moisture removing airflow has a velocity from the circumference to the center of the sector-shaped casing. By arranging the heating pipe 2530 at a position that is offset to the direction of the center of the sector-shaped casing relative to the air holes 2521, the moisture removing airflow passing through the air holes 2521 can be allowed to directly face the heating pipe 2530, such that the heating efficiency of the heating pipe 2530 on the moisture removing airflow is improved.

According to some embodiments, as shown in FIGs. 28 and 30, the lower wall of the sector-shaped casing 2510 extends outward to form a third mounting portion 2550. The heating module 2500 further includes a temperature sensor 2560 covered with a heat-conducting sheet 2570. After being covered with the heat-conducting sheet 2570, the temperature sensor 2560 is arranged on the third mounting portion 2550.

The temperature sensor 2560 is structured to detect the temperature of the heating module 2500 so as to achieve the control over the start/stop of the heating pipe 2530. It is understandable that the temperature in the heating module 2500 is not stable since the heated moisture removing airflow may lead to turbulences in the heating module 2500. If the temperature of the airflow in the heating module 2500 is directly detected by the temperature sensor 2560, the temperature value detected by the temperature sensor 2560 may be fluctuating and unstable, which is not conducive to the effective control of the heating pipe 2530. By arranging the temperature sensor 2560 in the heat-conducting sheet 2570, the temperature in the heating module 2500 is first conducted to the heat-conducting sheet 2570 through heat conduction, and the temperature sensor 2560 detects the temperature of the heat-conducting sheet 2570. The temperature of the heat-conducting sheet 2570 is more stable than the temperature of the airflow. Therefore, compared with directly detecting the temperature of the airflow by the temperature sensor 2560, detecting the temperature value of the heat-conducting sheet 2570 by the temperature sensor 2560 can improve the stability and accuracy of temperature detection, such that the heating pipe 2530 can be effectively controlled.

As mentioned above, the heating module 2500 heats the moisture removing airflow to obtain a high-temperature airflow. This high-temperature airflow can desorb the moisture from the regenerating region of the hygroscopic and dehumidifying rotary wheel to obtain the high-temperature moisture-containing airflow. After being heated by the heating module 2500, the high-temperature moisture-containing airflow continues to flow into the condensing module 2600. The condensing module 2600 condenses the high-temperature moisture-containing airflow into a low-temperature dry airflow, and condensate is discharged out of the condensing module 2600 through the condensate outlet. The low-temperature dry airflow resulting from treatment by the condensing module 2600 reenters the air inlet of the regenerating fan 2400 (corresponding to the above-mentioned closed-loop regenerating passage) or is discharged to the outside (corresponding to the above-mentioned open-loop regenerating passage).

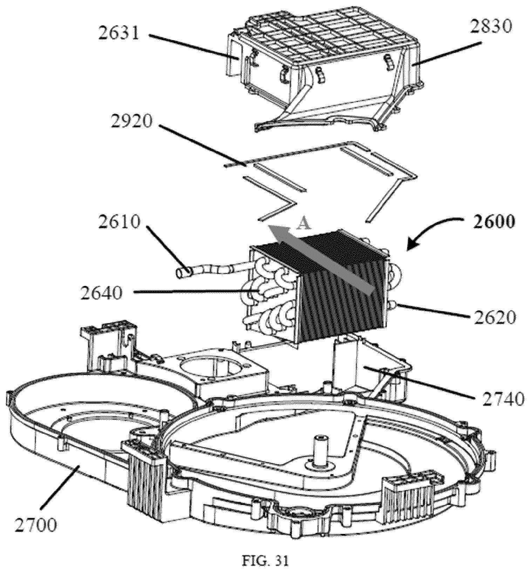

FIG. 31 shows a schematic diagram of a fixing mode between a condensing module 2600 and the lower casing 2700. As shown in FIG. 31, the upper casing 2830 of the condensing module is matched with the mounting portion 2740 (i.e., the lower casing of the condensing module) in the lower casing 2700 for mounting the condensing module. The upper casing 2830 of the condensing module covers the condensing module 2600, extrudes downward the sealing strip 2920 around the condensing module 2600, and is then airtightly fixed to the mounting portion 2740. The upper casing 2830 of the condensing module and the mounting portion 2740 form a complete outer casing of the condensing module 2600, i.e., the outer casing of the condensing module. An air outlet 2631 is formed in the outer casing of the condensing module, and is connected to the air inlet of the regenerating fan 2400 through a second connector 2910 (see FIGs. 20 to 28).

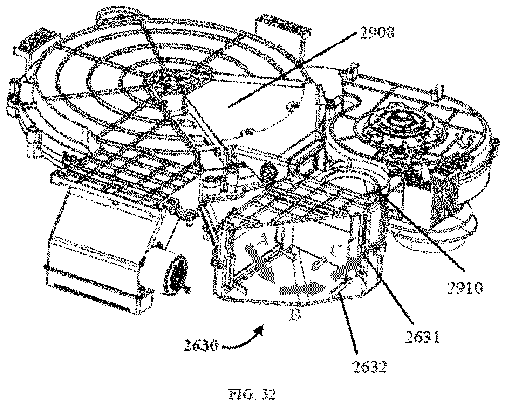

FIG. 32 shows a sectional view of an outer casing 2630 of the condensing module. As shown in FIG. 32, a high-temperature and high-moisture moisture removing airflow passing through the regenerating region 2908 enters the outer casing 2630 of the condensing module (as shown in arrow A), is dried (as shown in arrow B) by the condensing module 2600 (not shown in FIG. 32), and flows from the air outlet 2631 to the second connector 2910 (as shown in arrow C).

According to some embodiments, as shown in FIG. 32, a baffle 2632 is arranged on the bottom surface of the outer casing 2630 of the condensing module casing at a position close to the air outlet 2631. The baffle 2632 can improve the condensation effect of the condensing module 2600, such that the moisture removing airflow is fully dried by the condensing module 2600. For example, the baffle 2632 can prevent the moisture removing airflow entering the outer casing 2630 of the condensing module from flowing out directly through the gap between the condensing module 2600 and the bottom surface of the outer casing 2630 of the condensing module without passing through the condensing module 2600, thereby avoid the situation that this part of the airflow cannot be condensed and dried.

As shown in FIG. 31, a condensate pipe 2640 for circulating condensate is arranged in the condensing module 2600. The condensate pipe 2640 further includes a condensate inlet 2610 and a condensate outlet 2620. The direction shown by arrow A in FIG. 31 is the flow direction of the moisture removing airflow in the condensing module 2600.

According to some embodiments, a sensor for detecting the state of condensate, for example, a temperature sensor, a flow sensor or the like, may be arranged in the condensate pipe 2640, or an inductive sensor for detecting whether condensate flows through the condensate pipe 2640 is arranged outside a condensate inlet pipe. Based on the state data detected by the sensor, the condensate flow in the condensate pipe 2640 may be adjusted or an alarm may be sent, so as to ensure the normal operation of the condensing module 2600 and improve the condensing effect. For example, if the temperature sensor detects that the temperature of the condensate is too high, the current condensing effect may be relatively poor, and the flow rate of the condensate may be increased accordingly, so as to reduce the temperature of the condensate and improve the condensing effect. For another example, if the flow sensor detects that the flow of condensate is too small, the condensate pipe 2640 may be at risk of leakage and a warning message may be sent, so as to remind the user of checking or repairing the condensate pipe 2640. Of course, a temperature sensor may also be arranged at the air inlet and/or outlet of the casing of the condensing module, and whether the condensing module is working normally is determined based on a temperature detection value or a temperature detection difference or the temperature difference between the air inlet and the air outlet.

According to some embodiments, as shown in FIG. 31, the condensate pipe 2640 may be a serpentine pipe. In the example shown in FIG. 31, the condensate pipe 2640 is zigzaggedly arranged in the condensing module 2600, such that the contact area between the moisture removing airflow and the condensate pipe 2640 can be increased, so as to fully condense the moisture removing airflow. As shown in FIG. 31, the condensing module 2600 includes first and second sides opposite to each other in the flow direction of the moisture removing airflow (see arrow A), with the first side located downstream the second side. In an example not shown, both the condensate inlet 2610 and the condensate outlet 2620 of the condensate pipe 2640 are located on the side wall of the condensing module 2600, the side wall connects the first and second sides of the condensing module 2600, and the condensate inlet 2610 and the condensate outlet 2620 are closer to the first side than the second side. In such an example, the condensate pipe 2640 extends from the condensate inlet 2610 along a first zig-zag path towards the second side of the condensing module 2600 to a position distal from the first side, and then from that position along a second zigzag path towards the first side to the outlet 2620. Here, the length of the first zigzag path is greater than that of the second zigzag path, for example, 2 times that of the second zigzag path. It will be understood that such an arrangement may be advantageous since the temperature of the condensate gradually increases from the first side of the condensing module 2600 to the second side of the condensing module 2600 due to heat release by the moisture removing airflow, and in reverse, the temperature of the moisture removing airflow gradually decreases from the second side of the condensing module 2600 to the first side of the condensing module 2600 due to heat absorption by the condensate, such that a certain temperature difference is maintained between the moisture removing airflow and the condensate throughout the whole condensation process, thereby improving the condensing effect.

In any group of embodiments/any embodiment of the present application, one/a plurality of features involved can be combined with each other to improve the drying efficiency of the drying device.

Described above are merely preferred embodiments of the present application, which are not intended to limit the present application. A variety of changes and variations can be made to the present application for those skilled in the art. Any modification, equivalent replacement, improvement and the like made within the spirit and principle of the present application shall be construed as being included in the protection scope of the present application. It should be noted that similar numerals and letters refer to similar items in the accompanying drawings below. Therefore, once an item is defined in a drawing, it is unnecessary to further discuss and explain this item in subsequent drawings.

Described above are merely specific embodiments of the present application, however, the protection scope of the present application is not limited thereto. Any variations or substitutions that are readily conceivable to a person skilled in the art within the technical scope of the present application should be included within the protection scope of the present application. Therefore, the protection scope of the present disclosure should be subject to the protection scope of the claims as described.

## Claims

1. A laundry treating apparatus, **characterized in** comprising a drying device and a laundry accommodating device, wherein
the drying device comprises:
a hygroscopic and dehumidifying rotary wheel;
a casing, accommodating the hygroscopic and dehumidifying rotary wheel, wherein an internal space of the casing is at least separated into a moisture absorbing space and a moisture removing space;
a circulating fan, operating at a first power to form a circulating airflow flowing through the laundry accommodating device and through the moisture absorbing space; and
a regenerating fan, operating at a second power to form a regenerated airflow passing through the moisture removing space;
the laundry treating apparatus further comprises a driving part for the hygroscopic and dehumidifying rotary wheel, wherein the driving part drives the hygroscopic and dehumidifying rotary wheel to rotate around a rotating shaft in the casing at a first rotational speed; and
a difference between a numerical value of an area ratio of projections of the moisture absorbing space and the moisture removing space on at least one plane perpendicular to the rotating shaft, and a numerical value of a power ratio of the first power to the second power is within a range of ± 2.

2. The laundry treating apparatus according to claim 1, wherein a ratio of a thickness of the hygroscopic and dehumidifying rotary wheel to a diameter of the hygroscopic and dehumidifying rotary wheel is 1:20 to 1:5, preferably, 1:15 to 1:10.

3. The laundry treating apparatus according to claim 2, wherein the thickness of the hygroscopic and dehumidifying rotary wheel is 10 mm to 100 mm, and the diameter of the hygroscopic and dehumidifying rotary wheel is 40 mm to 500 mm.

4. The laundry treating apparatus according to claim 3, wherein the laundry accommodating device is a drum, the drum comprises an inner drum and an outer drum, and a ratio of the diameter of the hygroscopic and dehumidifying rotary wheel to a diameter of the inner drum is 1:2 to 3:4.

5. The laundry treating apparatus according to claim 1, wherein the area ratio is 2:1 to 4:1, and the power ratio is 2:1 to 4:1.

6. The laundry treating apparatus according to claim 1, wherein the first rotational speed is 2 rpm to 10 rpm, preferably, 4 rpm to 6 rpm.

7. The laundry treating apparatus according to claim 1, wherein the drying device further comprises a heating module and a condensing module, the heating module is disposed adjacent to the moisture removing space, and the condensing module is disposed on a flow path of the regenerated airflow.

8. The laundry treating apparatus according to claim 7, wherein the heating module operates between a first heating power and a second heating power, the first heating power is 400 W to 800W, and the second heating power is 1200 W to 1600 W.

9. The laundry treating apparatus according to claim 8, wherein the heating module fluctuates, in a form of a square wave, between the first heating power and the second heating power.

10. The laundry treating apparatus according to claim 7, wherein the condensing module is a water-cooled condenser, and a water flow rate of the condensing module is 0.2 L/min to 0.4 L/min, preferably 0.35 L/min.

11. A laundry treating apparatus, **characterized in** comprising a drying device and a laundry accommodating device, wherein
the laundry accommodating device is provided with a first airflow inlet, and the first airflow inlet is communicated to the drying device through an air intake pipe;
the laundry accommodating device is provided with a first airflow outlet, and the first airflow outlet is communicated to the drying device through an air exhaust pipe;
the drying device comprises:
a hygroscopic and dehumidifying rotary wheel, and a driving part for the hygroscopic and dehumidifying rotary wheel, wherein the driving part drives the hygroscopic and dehumidifying rotary wheel to rotate;
the laundry treating apparatus further comprises:
a first temperature detection device, arranged in a vicinity of the first airflow inlet and configured to detect a temperature of an airflow entering the laundry accommodating device, and
a second temperature detection device, arranged in the laundry accommodating device or in a vicinity of the first airflow outlet, and configured to detect a temperature of an airflow in the laundry accommodating device or a temperature of an airflow flowing out of the laundry accommodating device; and
at least in a stage of a working process of the laundry treating apparatus, a difference between a first detection temperature detected by the first temperature detection device and a second detection temperature detected by the second temperature detection device is 18°C to 30°C.

12. The laundry treating apparatus according to claim 11, wherein the first detection temperature is 70°C to 85°C, preferably, 75 °C; and the second detection temperature is 50°C to 60°C, preferably, 53°C.
